# EUROPEAN PATENT APPLICATION

(11) **EP 2 947 615 A1**
(43) Date of publication of application: **25.11.2015**
(21) Application number: 14169133.7
(22) Date of filing: 20.05.2014
(51) Int. Cl.: G06Q 20/12, G06Q 20/14, G06Q 20/20, G06Q 20/40, G07F 7/08

(54) **A method and a system for electronic payment**

(71) Applicant: Ekström, Hans, Gibraltar (GI)
(72) Inventor: Capurro, Alexzandre Anthony, Gibraltar (GI)
(74) Representative: Persson, Albin

(57) **Abstract**

The Mobile Electronic Payment Gateway device has been created to facilitate multiple different payments and refund scenarios via multiple methods. Payments can be performed as an on line, in person, token or phone transaction. The present invention is directed to any business that accepts non-cash transactions. From the device you can configure payment / refund routing by applying customizable rules. The device also has configurable alerts and monitoring risks regarding transactions. The device can operate from a static location or be mobile. The device has multiple redundant network connections. The device will be authenticated both physically and logically. All communications will be encrypted from the device. The device has multiple communication interfaces and will fail over between them automatically. Peripheral devices can be connected to the device such as printers, barcode scanners etc.

## Description

### TECHNICAL FIELD

A method and a system for electronic payment and a mobile physical device facilitate a variety of payment and refund methods (including but not limited to on line alternative payment methods). Payments can be performed as an on line, in person, token and phone transaction. The present invention is directed to any business that accepts non-cash transactions.

### PRIOR ART

Non-cash transactions can be performed in different ways. Retailers may possess a so called PDQ (Process Data Quickly) electronic payment system which will allow a customer to pay a retailer for goods or services instantly with the use of a credit or debit card.

There are also platforms such as Paypal, Moneybookers (skrill), Datacash and WorldPay to name a few, providing online merchants with the tools and services required to be able to transact online. Most online merchants, if not all, will already offer a form of online credit card payment for their customers. Some of these merchants will be directly integrated into acquires such as Barclays, Natwest, etc whereas others will be connected to a Payment Processing Platform that is directly connected to acquires such as TNS, BIBIT or World Pay. Smaller merchants normally offer credit card processing through a Payment Solution Provider such as PayPal or MoneyBookers.

These transactions include processing fees that are charged for processing credit card transactions as well as having the complexity of the integration into each platform. Integrating directly into an acquirer means the merchant can get more competitive rates when processing their transactions whereas going through a provider such as PayPal means merchants end up paying more in terms of processing fees however the benefits are substantial for smaller merchants such as the ability to be fully indemnified thus reducing charge back costs as well as an easier API integration. The difference in rates can vary between 1 % up to 7% per transaction.

A problem is that not all customers can or want to pay for their goods with their credit cards. Some customers have a genuine fear of using their card details online for fear of identity theft. Others simply do not want their partners to find out through their bank statements that they have been gambling or viewing adult related websites. In other cases, some customers simply do not have a credit card or have a domestic credit card that does not work with the acquirer or provider that the merchant is integrated into.

One of the problems faced by most merchants is the hassle of maintaining and organising all the different payment solutions and services that they may need. Most merchants will have multiple integrations into various payment solutions or gateways. This can be extremely messy, time consuming to maintain and costly. Because of this, most merchants are limited to just integrating into one gateway or one or two payment solutions. For retailers it also means having multiple PDQs, one for each different card acquirer or network. Not to mention that retailers are limited to credit cards only.

### SUMMARY OF THE INVENTION

Prior art platforms lack the ability for retailers and the smaller online merchant to easily integrate. Merchants need to have sophisticated servers or at least a simple database to keep track of payments. Retailers still are limited to taking credit card transactions via standard PDQ machines at high processing fees.

The present invention is designed for retailers and the smaller online merchant and is an easy payments gateway (EPG) platform, comprising an EPG payment device and an EPG platform services server. It is designed for the merchant who processes small volumes on a monthly basis, and the merchant who does not want to spend the time or the money maintaining and integrating into various payment providers in order to offer their customers the best online payment options available. A device in accordance with the invention allows merchants to quickly and easily process transactions online.

The EPG Payment Device is primarily designed for retailers who wish to offer more payment solutions to their customers other than just credit cards. With the EPG Payment Device retailers will be able to offer their customers online alternative payment solutions in the real world. In addition to this they will be able to continue offering Credit Card services (at much lower processing fees than conventional PDQ devices). In various embodiments there will be provided also other features such as NFC payments and facial recognition for payment authentication.

The EPG platform is an all in one self-contained package that can be directly accessed by the merchant via the supplied EPG payment device or going directly to the EPG platform services via an online platform. Online integration is achieved with one simple form submission as opposed to one integration per payment solution or service offered, as is currently the case with most merchants.

The EPG platform services can be a stand-alone piece of software that takes the customers checkout request from the EPG payment device or from a merchant's website, validates the data and then presents the customer with the available payment options. Once the customer selects a payment method, he is then redirected to the relevant page and the payment is processed. The status of the transaction (failed, success or cancelled) then can be sent back to the merchant so that they can update their own internal records.

The EPG payment device is a truly mobile payment device that's does not require a physical phone line. Built entirely from scratch and based on a cellular telephone operating system such as Android, the EPG payment device works over WIFI or 3G. In various embodiments it contains 2 SIM slots and thus can be used anywhere and reduces the chances of signal loss as it can fail over both SIMS. Retailers will be able to quickly and securely process any transaction in real time using any of the payment methods offered by the EPG platform. Below is a list of features supported by the EPG Payment Device:
a) Mobile Electronic Payment Gateway device can process multiple forms of non-cash transactions using but not limited to on line payment solutions, Credit Cards with Magnetic Strip, Credit Cards with Smart Card and NFC devices.
b) Mobile Electronic Payment Gateway device has risk monitoring and alerts that are configurable for the customer account.
c) Mobile Electronic Payment Gateway device has routing and failover of payment and refund transactions that can be configured from the Electronic Payment Device.
d) Mobile Electronic Payment Gateway device has authentication that is both logical and physical, confirming the physical device address, retailer information and location.
e) The device has Customer authentication including but not limited to biometric identification.
f) Peripheral devices can be connected to the device such as printers, barcode scanners etc, via various methods including but not limited to Bluetooth and micro USB (Universal Serial Bus)
g) Mobile Electronic Payment Gateway device has multiple communication interfaces and can fail over between them automatically.

In addition to the EPG Payment Device, small online merchants will also be able to:
- Process transactions online via various online payment methods in a secure and easy way.
- Turn solutions on or off in real time.
- Directly invoice customers from an EPG back office.
- Run statements to see the status of a particular transaction or a range of transactions.
- Easily integrate using existing open source e-commerce frameworks such as 'OSCommerce' and 'Magento'.

An example of an online checkout scenario is shown below.
1. Customer selects the products they wish to buy from the merchant website.
2. Customer selects to checkout.
3. Merchant sends request to EPG for a customer checkout.
4. EPG presents the customer with the available payment options.
5. Customer selects an option (i.e. Paypal).
6. EPG redirects the customer to Paypal.
7. Customer completes payment on Paypal website and is redirected back to EPG.
   a) Paypal sends EPG the status of the transaction (i.e. Success).
8. EPG redirects the customer back to the merchant's success page.
   a) EPG sends status of transaction to merchant via status update URL.
   b) EPG sends merchant an email informing merchant of transaction status.

An example of a self employed accountant invoicing a client scenario is shown below.
1. Accountant completes his services for a particular client.
2. Accountant logs on to the EPG back office and creates a new invoice for his customer.
3. Accountant enters a unique invoice ID for his invoice. This is an optional field. EPG creates its own internal invoice IDs.
4. Accountant finishes entering the invoice details and then sends the invoice to the customer via the EPG back office. It's important to note that EPG also offers a mobile version of the back office via the EPG Payment Device, so EPG users could process their invoices in real time if they were in presence of their customers by handing over their smart phones.
5. EPG sends the customer an email with the invoice and a link that directs the customer directly to the EPG payment page.
6. Customer pays the invoice.
7. EPG sends both the customer and the accountant an email receipt confirming the payment of the invoice.

An example of an EPG payment device credit card payment is shown below.
1. The customer proceeds to checkout counter.
2. The Retailer enters the amount to be processed and selects a currency.
3. The EPG device sends authentication details synchronously over SSL including MAC (physical) address, device identification, location, amount and currency.
4. The EPG Server attempts to authenticate the EPG device request.
   a) If step 4 fails, then an error is sent back to the device. This will LOCK the device until the retailer re-authenticates.
5. If authentication is successful, then the EPG Service creates a database entry of the transaction with a pending status and generates the UUID (universally unique identifier) for the session.
6. If the request has been successfully authenticated then the EPG Service returns a list of payment methods available and the UUID based on location/currency/retailer sent in the request.
7. The Retailer hands the EPG device over to the customer.
8. The customer selects the credit card payment option and inserts his credit card into the ICC (Integrated Circuit Card) in the EPG device.
9. The EPG device reads the credit card chip and prompts the customer to enter the credit card personal identification number.
   a) If step 8 fails, then the customer will be prompted to authenticate again or to swipe the card instead or to choose another payment method
10. The customer enters his personal identification number on the EPG device.
11. The EPG device validates the entered personal identification number against the inserted credit card.
12. if successful authentication of credit card, then the EPG device makes a synchronous request over SSL encrypted including MAC (physical) address, device id, location, amount, currency and selected payment type and credit card details to proceed with transaction.
13.The EPG Server updates the transaction status in database and makes a MOTO (Mail Order/Telephone Order) sale request to an acquirer.
   a) If step 13 fails, then an error is returned to the EPG device and the retailer can retry the process or cancel it entirely.
14.The acquirer returns the result of the transaction.
15.The EPG Service updates the transaction status in database.
16.The EPG service returns the result of the transaction to the EPG device.
17.The EPG device displays the result of the transaction.
18. The Retailer can now print a receipt or end the completed transaction session.

EPG offers a back office for merchants with which they can configure and maintain their payment accounts as well as configure all of the payment options on offer. In other words, merchants are able to turn payment options on or off in real time.

EPG also gives merchants the capabilities to search for specific transactions as well as perform searches based on date ranges. Thus providing merchants with all the information they require fulfilling their orders and keeping their balances up to date. These facilities can be accessed via the EPG Payment Device as well as via the online EPG Back Office.

EPG users will be able to manually perform searches on the EPG platform in order to see the status of any payments in relation to sales and invoices that have been produced. The user can perform this at any given time by either entering a specific transaction/invoice ID or by entering a date range. Users can also filter through their transactions by status, so they can see all pending transactions, cancelled, erroneous or fulfilled. Additionally, EPG will produce overnight reports and automatically email users with any transactions that have been pending for more than 24 hours. Users will be able to select these transactions and decide on how to action them (i.e. leave pending, void, etc).

Access to all the data will be available only to the EPG platform via encrypted passwords and secure connections. Online Merchants will be able to access this data via the EPG back office whereas EPG Payment Device users can access this directly from the device. Only certain EPG processes will be able to read and write into the database thus limiting what exactly has access to this data significantly. Even these processes will only be able to access the database if they provide the required credentials and the call is made from a secure and accepted IP address. This will ensure that the communication between the different components within EPG is secure and will also help in preventing any external attacks or breaches.

Generally there are three types of accounts that merchants can have with EPG. First there is the Online Merchant Account that is designed for merchants who have an online presence and wish to sell products or services online. Secondly there is the retailer who uses the self contained EPG Payment Device, and then there is the Offline Account that is designed for people who simply want to be able to invoice their customers (such as retailers, contractors, freelancers or small offline businesses).

With invoicing, users will be able to generate invoices automatically with the EPG back office. They can also attach a previously made invoice such as a PDF or document These invoices will have an auto generated invoice number, although users will be free to add their own number scheme if they want to. Users will be able to enter details into the invoice such as a description, amount break down, total amount, VAT % etc. Users will also be able to customise these invoices to include a logo, header and footer changes. There will be set templates from which the user can choose although each one will allow for customisation. Finally, users will be able to choose a specific payment method they want their customers to use to receive payments or they can leave EPG to show the customer the full list of available methods.

Once the invoice is sent to the customer, email confirmations will be sent. EPG will also track invoice status and payments so automatic reminders will be sent to both the customer and the merchant informing them if the payment due date is about to expire or if it is in fact overdue. Users will also be able to manually update the status of an invoice to allow for manual payments such as cheques. Additionally, invoices can be downloaded and printed from within the back office so that users can keep physical records of their invoices.

The EPG Payment Device also offers retailers and Customers the possibility to pay for goods in the real world via an array of different payment methods including Credit Cards and Alternative Online Payment Solutions via NFC (Near Field Communication) technology. Using the EPG NFC facilities, customers are able to store their payment information securely and encrypted onto their NFC device.

The EPG Payment Device enables customers to shop without needing their wallets. EPG materialises the concept of having a virtual wallet. It enables the use of online virtual payment methods to be used in the real world. Never again will a person have to depend on carrying their credit cards or cash on them at all times when purchasing products from a shop or online. EPG facilitates a safer way to go shopping as there will be no risk of losing cash/cards or even have them stolen, since you will no longer have to carry them with you. EPG merges the online payment world with the physical real world.

Using an authorised EPG NFC device (i.e. an NFC bracelet or an NFC sticker), people will be able to 'virtually pay' for whatever goods/products they wish to buy. Whether its clothes, electronics, food, airline tickets, customers will be able to automatically send the amount payable to the retailer instantly and securely without the need to physically hand over cash, or the need to enter secure information (such as a signature or credit card pin number).

EPG also allows customers to set payment limits as well as black lists on all their payment accounts. EPG NFC customers are able to set payment limits which will allow them to pay for goods without having to authenticate. Any payments above these limits will require the customer to authenticate; this can be done by either entering a PIN or via facial recognition. Customers are also able to black list retailers and online merchants which means that if any payments requests are received relating to any of the black listed retailers/online merchants the payment will be rejected.

Via an EPG back office, customers are easily able to set payment limits with for every payment account stored on their NFC device as well as for every NFC device they have associated to their account. This is easily achieved via the use of sliders and lists of EPG official retailers/online merchants are provided that the customer can use to black list if they wish to.

This means that customers are able to remotely manage any of their NFC devices and payment accounts in real time. For example, you could have one NFC device per family member, linked to various different payment accounts. Via the EPG back office, the main account holder can change the limits and black lists for each NFC device meaning you can limit or expand how much money each family member can spend at any time without having to authenticate and where that money is spent. Likewise, customers are able to immediately lock any NFC device or payment account in real time meaning all payments will be rejected (whether online or via the EPG Payment Device). This is particularly useful if the customer loses their NFC device or suspects any of their payment accounts have been compromised.

An example form submission from an online merchant in order to use EPG is set out in the table below.

| **Parameter** | **Required** | **Description** |
|---|---|---|
| merchantID | YES | This is the unique identifier provided by EPG to the merchant |
| merchantPassword | YES | This is a unique password created by the merchant on the EPG platform |
| customerID | Optional | Unique customer id provided by merchant |
| customerEmail | Optional | Customer's email address |
| amount | YES | Total amount of transaction |
| description | YES | Description of the transaction that is taken place. No more than 500 characters |
| country | YES | Country of the customer |
| currency | YES | Currency of the transaction |
| addressLine 1 | Optional | Customer's address line 1 |
| addressLine2 | Optional | Customer's address line 2 |
| city | Optional | Customer's City |
| postcode | Optional | Customer's post code |
| telephone | Optional | Customer's telephone |
| firstname | Optional | Customer's firstname |
| lastname | Optional | Customer's lasname |
| transactionld | Optional | Merchant's unique transaction id |
| test | YES | This should be set to 0 for real transactions or 1 for test |

All form submissions preferably should be performed over HTTPS. Online Merchants are also able to request payment from a specific payment solutions, this means that the customer will not be presented with various options.

Finally, there are a few more parameters that online merchants can send. These are used so that EPG can automatically update the merchant of the transaction's status as well as redirecting the customer:

| **Parameter** | **Required** | **Description** |
|---|---|---|
| statusURL | Optional | URL where the merchant would like EPG to automatically send the status of the payment |
| errorURL | YES | URL where the merchant would like EPG to redirect the customer upon an erroneous payment |
| successURL | YES | URL where the merchant would like EPG to redirect the customer upon a successful payment |
| cancelledURL | YES | URL where the merchant would like EPG to redirect the customer after the customer has decided to cancel the payment |

### BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:
- Fig. 1: is a schematic perspective top view of one embodiment of an EPG payment device in accordance with the invention,
- Fig. 2: is a schematic perspective bottom view of the EPG payment device of Fig. 1,
- Fig. 3: is a schematic perspective view of one embodiment of a printer device connectable to an EPG payment device in accordance with the invention,
- Fig. 4: is a schematic block diagram showing main components of the EPG payment device of Fig. 1,
- Fig. 5: is a schematic flow chart showing a status check made by a retailer of a previous transaction,
- Fig. 6: is a schematic flow chart showing how a retailer can check the status of a previous transaction and subsequently update the status manually,

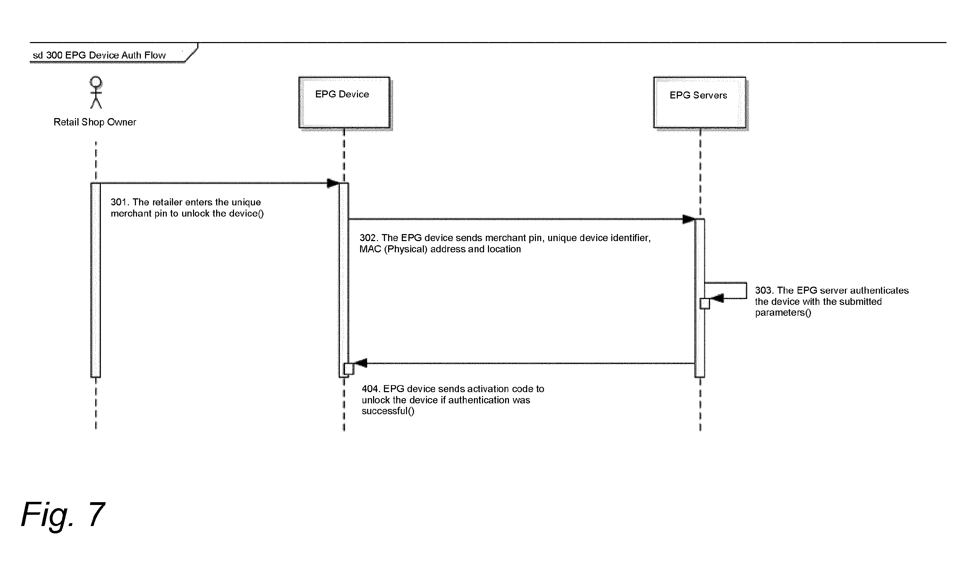

- Fig. 7: is a schematic flow chart showing how a retailer needs to authenticate in order to use the EPG Device whenever the device is turned on after being turned off or reset,
- Fig. 8: is a schematic flow chart showing how the EPG device is able to communicate with EPG Servers via different methods,
- Fig. 9: is a schematic flow chart showing how a retailer can take a credit card payment over the phone (MOTO - Mail Order/Telephone Order) when the customer is not present,
- Fig. 10: is a schematic flow chart showing how a payment can be processed via the EPG device using a credit card with a chip (smart card),
- Fig. 11: is a schematic flow chart showing how a retailer can override a transaction and authorize it by inserting a referral authorization code as supplied by the acquirer,
- Fig. 12: is a schematic flow chart showing a fail over to different acquirers for the selected payment method,
- Fig. 13: is a schematic flow chart showing how a customer can pay using a non-smart card credit card,
- Fig. 14: is a schematic flow chart showing how a customer can pay using an alternative online payment method (other than credit card),
- Fig. 15: is a schematic flow chart showing how a customer can pay using an NFC device,
- Fig. 16: is a schematic flow chart showing a failed authentication for an NFC activated payment,
- Fig. 17: is a schematic flow chart showing how a customer can pay using an NFC device with no limits set,
- Fig. 18: is a schematic flow chart showing how a customer can pay using an NFC device with no limits set when retailer denies,
- Fig. 19: is a schematic flow chart showing how a retailer can request a refund for a previously processed transaction,
- Fig. 20: is a schematic flow chart showing how a retailer can request a refund for a previously processed transaction when the original acquirer fails to process the refund,
- Fig. 21: is a schematic flow chart showing an example of the type of screens (User Interface) that the EPG payment device will display when a customer performs a checkout,
- Fig. 22: is enlarged view of the EPG payment device in step 1 in Fig. 21,
- Fig. 23: is enlarged view of the EPG payment device in step 2 in Fig. 21,
- Fig. 24: is enlarged view of the EPG payment device in step 3 in Fig. 21,
- Fig. 25: is enlarged view of the EPG payment device in step 4 in Fig. 21,
- Fig. 26: is enlarged view of the EPG payment device in step 5 in Fig. 21,
- Fig. 27: is enlarged view of the EPG payment device in step 6 in Fig. 21,
- Fig. 28: is enlarged view of the EPG payment device in step 7 in Fig. 21, and
- Fig. 29: is a schematic block diagram showing a high level overview of components used in an EPG system comprising an EPG payment device and an EPG platform services server.

### DETAILED DESCRIPTION

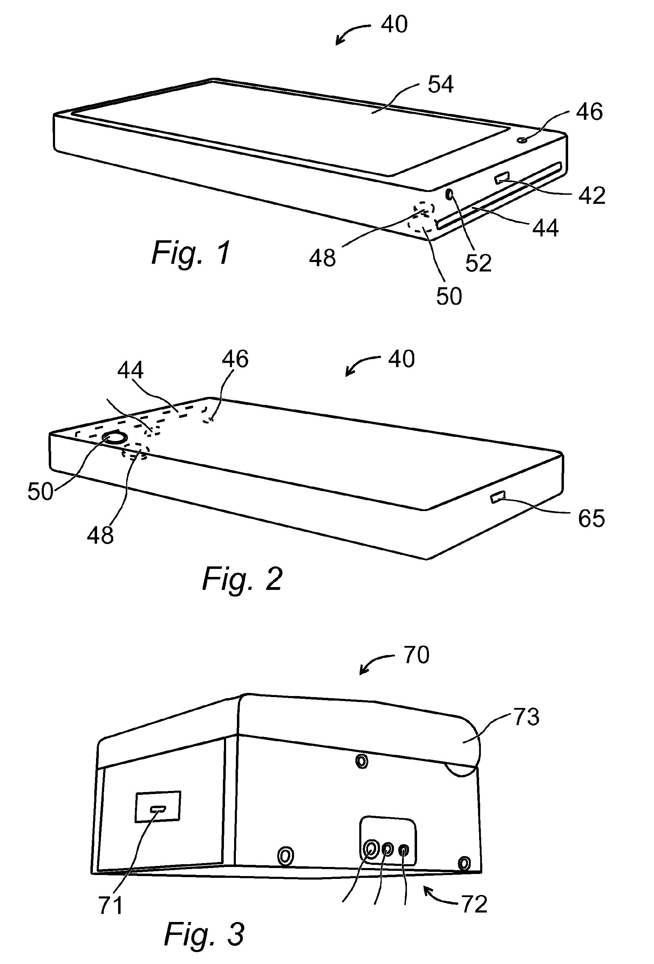

The embodiment of an EPG payment device 40 shown in Fig. 1 and Fig. 2 comprises a top Micro USB 42 used for connection remote devices such printer and other peripheral such as a bar code scanner, and a card slot 44 for smart and magnetic cards. A front camera 48 can be used for facial recognition. The EPG payment device 40 comprises also a Near Field Communication (NFC) means 48 that allows for close contact transfer of information including transactions from another NFC tokens, and a rear camera 50 that can be used for barcode scanning. The device can be switched on and off with an On / Off button 52. Most of a front side of the EPG payment device 40 is covered by a device screen 54 that preferably is HD and operates as a multi touch screen either by hand or stylus. A bottom micro USB 65 is for connection remote devices such as docking stations, printers and for charging the device.

Fig. 3 shows a printer 70, such as of thermal type. Preferably it is a small form printer powered by a rechargeable battery. It comprises a micro USB 71 to connect to an EPG payment device 40 or to a docking station (not shown). A plurality of status buttons and indicators 72 report on power, paper and different kind of errors. A printer head 73 prints on paper, such as a thermal paper roll.

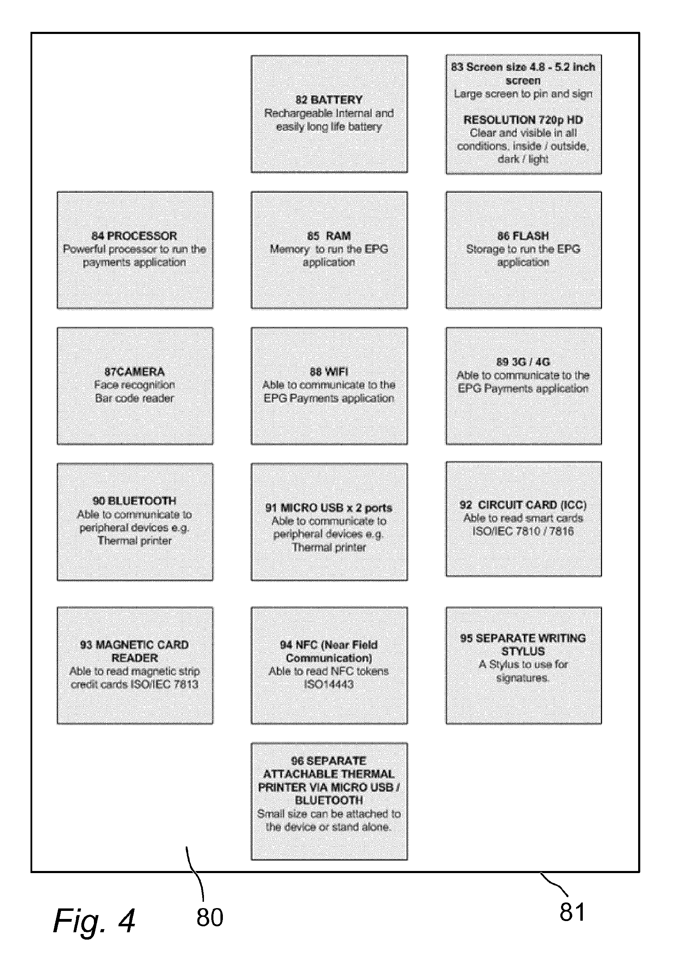

Different modules and components of the EPG payment device 40 are enclosed in a casing 81 as shown in Fig. 4. All modules and components are interconnected in a conventional manner. The casing 81 is durable to allow easy access to configure the device. The EPG payment device 40 comprises a rechargeable internal and easily long life battery 82, and a large screen 83, such as at least 12-13,5 cm (4.8-5.2 inches), to pin and sign. The screen 83 is clear and visible in all conditions, inside / outside, dark / light and has a resolution of at least 720 p HD.

The EPG payment device 40 further comprises a powerful processor 84 to run payments applications, and a RAM memory unit 85 and flash memory unit 86 storing payment applications and data. A camera unit 87 comprises a front camera 48 suitable for facial recognition and a rear camera 50 suitable for barcode scanning.

Communication to and from the EPG payment device 40 is handled by a WIFI unit 88 and 3G/4G unit 89 capable of communicating with the EPG Payments application. Further, a Bluetooth unit 90 and a micro USB unit 91 comprising a top Micro USB 42 for connection to remote devices such printer and other peripheral such as a bar code scanner, and a bottom micro USB 65 for connection remote devices such as docking stations, printers and for charging the device.

An ICC reader 92 comprises a card slot 44 for smart cards and a magnetic reader 93 that can be used for reading magnetic strip credit cards. A near field communication module 94 comprising near field communication means 48 provides for close contact transfer of information including transactions from other NFC tokens. A separate writing stylus 95 can be used. A printer module 96 is used for printing on a connected or stand-alone small sized printer 70.

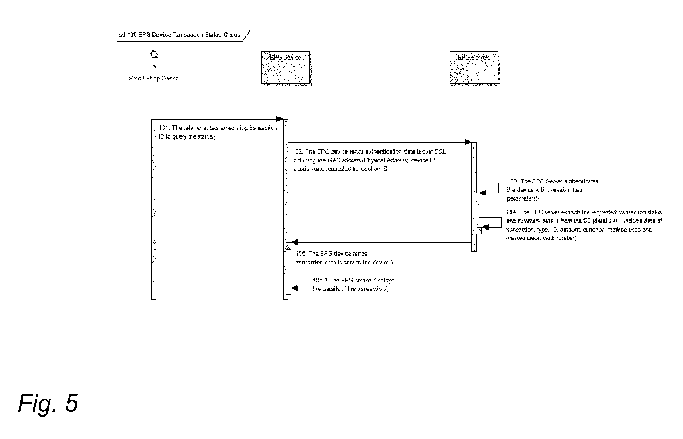

The flow diagram of Fig. 5 shows an EPG Device Transaction Status Check 100 used to allow a retailer to check the status of a previous transaction.
Assumptions: The retailer is already authenticated on the EPG device.
Constraints: The EPG device has power and is not factory locked. The EPG device has Internet access.
- 101. The Retailer enters an existing transaction identifier into the EPG device in an attempt to query the status of the relating transaction.
- 102. The EPG device sends authentication details over SSL including MAC address (Physical), device identifier, location and the requested transaction identifier entered by the retailer.
- 103. The EPG servers authenticate the device with the submitted parameters by comparing the data supplied with the corresponding data securely stored on the servers.
- 104. The EPG service extracts the requested transaction status and summary details from the database (details will include but no limited to date of transaction, type, identifier, amount, currency, method used, credit card number -masked-, acquirer used, acquirer telephone).
   o *If step **104** fails for example because the transaction identifier requested is not found then an error message will be sent to the EPG device (TRANSACTION NOT FOUND).*
- **105.** The EPG service sends the transaction details back to the EPG device.
- **105.1** The EPG device displays the details of the transaction requested and the Retailer can either print the details or end the session.

As part of step **105.1** the retailer will be able to print the summary of the transaction. If step **105.1** shows a status of UNKNOWN or PENDING (e.g because the acquirer never returned a status update) then the retailer will need to phone the acquirer and can then manually update the transaction as shown in flow EPG Device Transaction Update Flow with the real result of the transaction.

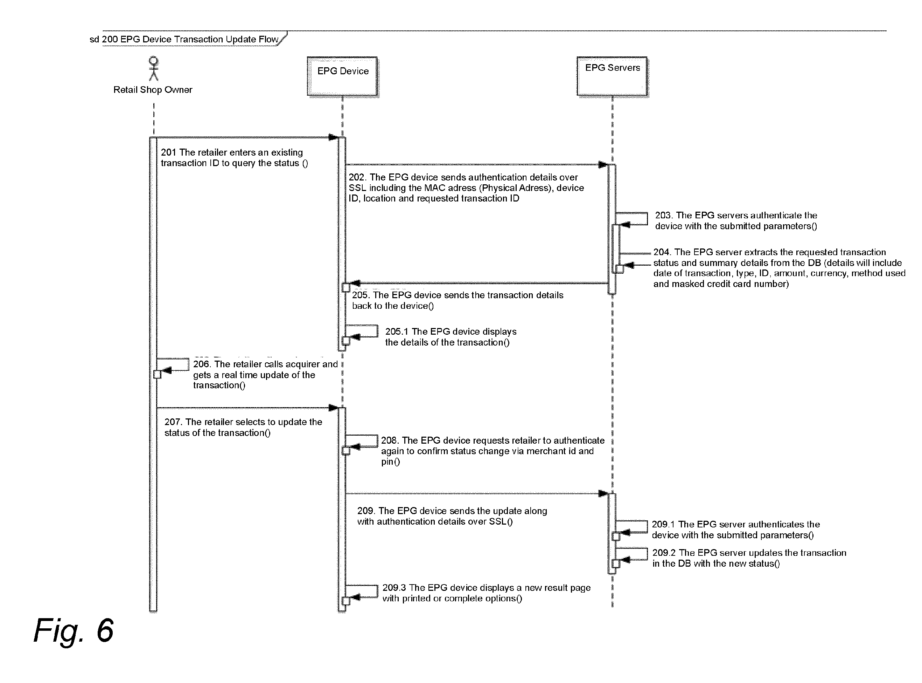

The flow diagram of Fig. 6 shows an EPG Device Transaction Update Flow **200** and more specifically how a retailer can check the status of a previous transaction and subsequently update the status manually.
**Assumptions:** The retailer is already authenticated on the EPG device. There is a valid transaction in the EPG database.
**Constraints:** The EPG device has power and is not factory locked. The EPG device has Internet access.
- **201.** The Retailer enters an existing transaction identifier into the EPG device in an attempt to query the status of the relating transaction.
- **202.** The EPG device sends authentication details over SSL including MAC address (Physical), device identifier, location and the requested transaction identifier entered by the retailer.
- **203.** The EPG servers authenticate the device with the submitted parameters by comparing the data supplied with the corresponding data securely stored on the servers.
- **204.** The EPG service extracts the requested transaction status and summary details from the database (details will include date of transaction, type, identifier, amount, currency, method used, credit card number -masked-, acquirer used, acquirer telephone, etc).
- *If step **204** fails for example because the transaction identifier requested is not found then an error message will be sent to the EPG device **(TRANSACTION NOT FOUND).***
- **205.** The EPG service sends the transaction details back to the EPG device.
- **205.1** The EPG device displays the details of the transaction requested.
- **206.** The Retailer calls the acquirer listed against the transaction and gets a real time update of the transaction.
- **207.** The Retailer selects to update the status of the transaction on the EPG device. *(A drop down with relevant status updates will be shown)*
- **208.** The EPG device requests the retailer to authenticate again to confirm status change via merchant identifier and personal identification number.
- *If step **208** fails, the retailer will be asked to authenticate again. There will only be a set amount of attempts for this until the device locks its self up (see **EPG Device Auth Flow)***
- **209.** The EPG Device sends the update request along with the transaction identifier and authentication details over SSL to the EPG Servers.
- **209.1** The EPG Servers authenticate the EPG device with the submitted parameters.
- **209.2** The EPG Services update the transaction in the database with the new status. *(A record of the original status and transaction is also kept for historic purposes)*
- **209.3** The EPG device displays a result page with print or complete options.

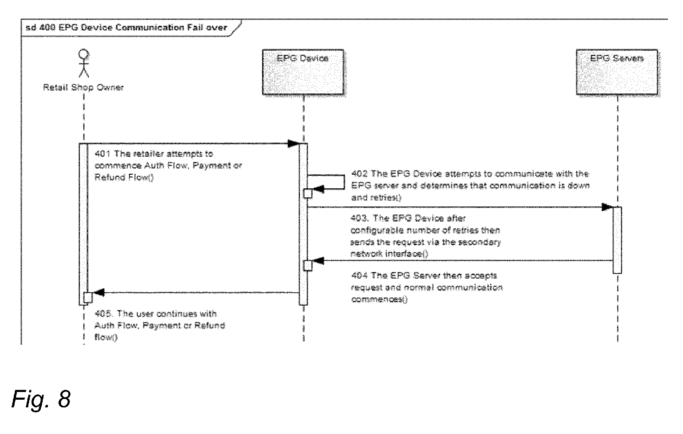

The flow diagram of Fig. 8 shows EPG Device Communication Fail Over flow **400.** This flow shows how the EPG device is able to communicate with the EPG Servers via different methods.
**Assumptions:** The EPG device has at least one of the 2 SIM cards inserted, either of them with Internet access (GPRS, 3G or above).
**Constraints:** The EPG device has power and is not factory locked. EPG Device has Internet access.
- **401.** The Retailer attempts to commence Auth Flow, Payment or Refund Flow on the EPG Device.
- **402.** The EPG Device attempts to communicate with the EPG servers and determines that communication is down and retries X times.
- **403.** The EPG Device after configurable retries then sends the request via the secondary network interface.
- **404.** The EPG Servers then accepts request and normal communication commences.
- **405.** The Retailer continues with Auth Flow, Payment or Refund flow.

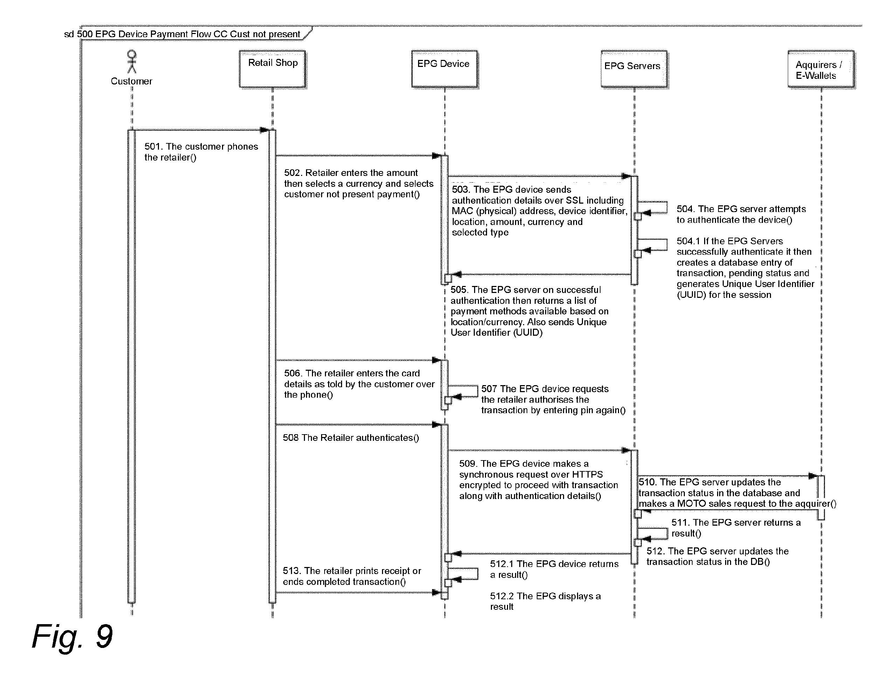

The flow diagram of Fig. 9 shows EPG Device Payment Flow Credit Card (customer not present) **500.** This flow shows how a retailer can take a credit card payment over the phone (MOTO - Mail Order/Telephone Order) when the customer is not present.
**Assumptions:** The Retailer is registered to use an acquirer that allows for MOTO transactions.
**Constraints:** The EPG device has power and is not factory locked. EPG Device has Internet access.
- **501.** The customer phones the retailer to purchase an item over the phone.
- **502.** The Retailer enters the amount, selects currency and selects customer not present payment on the EPG Device.
- **503.** The EPG device sends the authentication details over SSL including MAC (physical) address, device id, location, amount, currency and selected payment type *(in this case MOTO credit card*).
- **504.** The EPG Servers attempt to authenticate the device with the submitted details.
- *If step **504** fails, then an error is sent back to the EPG device. This will **LOCK** the device until the retailer re-authenticates as per flow **'100 EPG Device Auth Flow***' (this is true in all flows).
- **504.1** If the EPG Servers successfully authenticate the EPG Device then the EPG Service will create a database entry of the transaction setting it to a **PENDING** status and generates a UUID (universally unique identifier) to be used for this session.
- **505.** The EPG Service then returns a list of payment methods available based on merchant/location and currency. Also sends UUID (universally unique identifier).
- **506.** The Retailer enters the customer's credit card details as told by the customer over the phone.
- **507.** The EPG device requests the retailer authorizes the transaction by entering the retailer personal identification number again.
- **508.** The Retailer authenticates by entering his personal identification number on the device.
- **509.** The EPG device sends a synchronous payment request along with authentication details over HTTPS encrypted to the EPG Servers to proceed with transaction.
- **510.** The EPG services update the transaction status in database and performs a MOTO sale request to the selected acquirer based on routing rules.
- *If step 510 fails, then an update is sent from the EPG Service to the EPG device with a **'FAILED TO AUTHENTICATE***' *status message and the EPG Device will show* a ***'CANCELED'**result page with option to print receipt or choose an alternative payment method.*
- **511.** The selected acquirer returns the result of the transaction.
- **512.** The EPG Service updates the transaction status in the database.
- **512.1** The EPG Service returns the result to the EPG device.
- **512.2** The EPG device displays result returned by the EPG Service.
- **513.** The retailer can now print a receipt or end the completed transaction session.

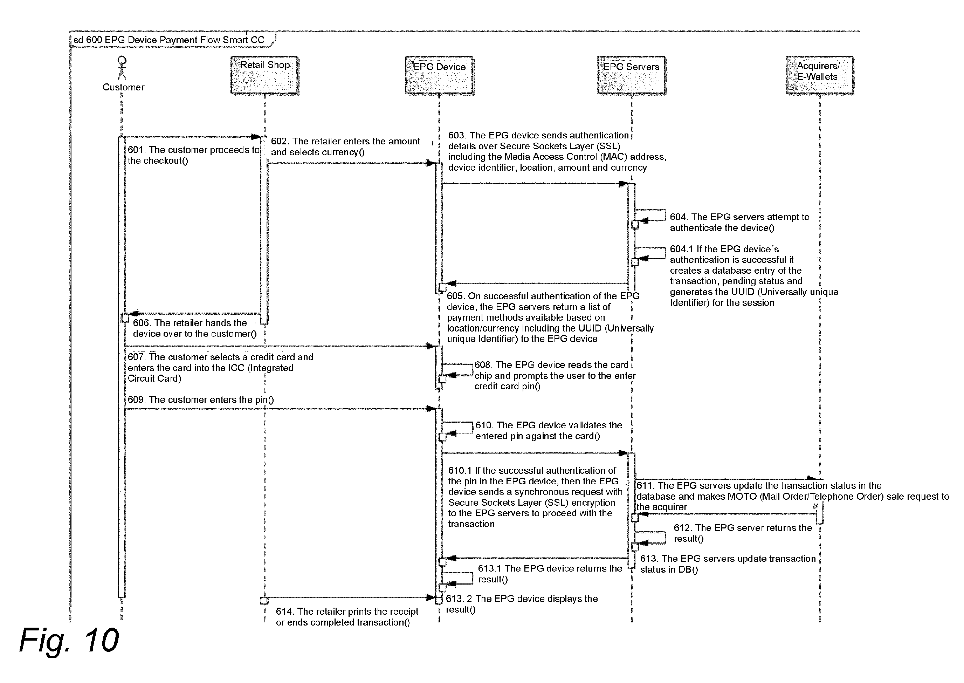

The flow diagram of Fig. 10 shows **EPG Device Payment Flow Smart Credit Card 600** and how a payment can be processed via the EPG device using a credit card with a chip (smart card).
**Assumptions:** The retailer is registered to use a credit card acquirer.
**Constraints:** The EPG device has power and is not factory locked. EPG Device has Internet access.
- **601.** The customer proceeds to checkout.
- **602.** The retailer enters the amount to be processed and selects a currency.
- **603.** The EPG device sends authentication details synchronously over SSL including MAC (physical) address, device identification, location, amount and currency.
- **604.** The EPG Server attempts to authenticate the EPG device request.
- *If step **604** fails, then an error is sent back to the device. This will **LOCK** the device until the retailer re-authenticates as per flow '100 **EPG Device Auth Flow'.***
- **604.1** if authentication is successful, then the EPG Service creates a database entry of the transaction with a pending status and generates the UUID (universally unique identifier) for the session.
- **605.** If the request has been successfully authenticated then the EPG Service returns a list of payment methods available and the UUID based on location/currency/retailer sent in the request.
- **606.** The retailer hands the EPG device over to the customer.
- **607.** The customer selects the credit card payment option and inserts his credit card into the ICC (Integrated Circuit Card) in the EPG device.
- **608.** The EPG device reads the credit card chip and prompts the customer to enter the credit card personal identification number.
- *If step **608** fails, then the customer will be prompted to authenticate again or to swipe the card instead. See **'EPG Device Payment Flow Swipe CC'** or to choose another payment method (see **'1000 EPG Device Payment Flow non CC'**).*
- **609.** The customer enters his personal identification number on the EPG device.
- **610.** The EPG device validates the entered personal identification number against the inserted credit card.
- **610.1** if successful authentication of credit card, then the EPG device makes a synchronous request over SSL encrypted including MAC (physical) address, device id, location, amount, currency and selected payment type and credit card details to proceed with transaction.
- **611.** The EPG Server updates the transaction status in database and makes a MOTO (Mail Order/Telephone Order) sale request to an acquirer.
- *If step **611** fails, then an error is returned to the EPG device and the retailer can retry the process or cancel it entirely.*
- **612.** The acquirer returns the result of the transaction.
- **613.** The EPG Service updates the transaction status in database.
- **613.1** The EPG service returns the result of the transaction to the EPG device.
- **613.2** The EPG device displays the result of the transaction.
- **614.** The Retailer can now print a receipt or end the completed transaction session.

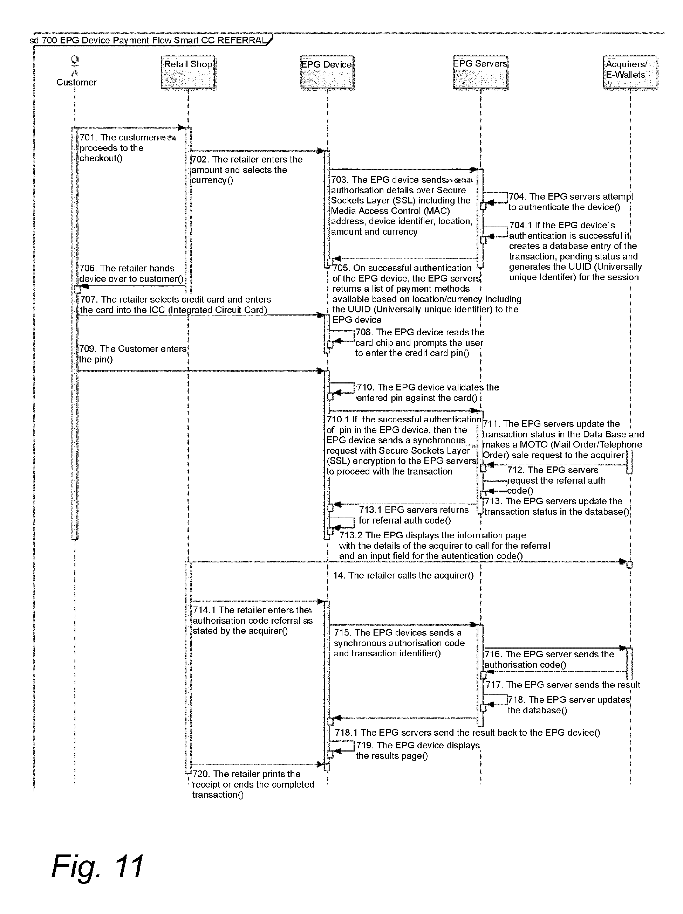

The flow diagram of Fig. 11 shows **EPG Device Payment Flow Smart Credit Card REFERRAL 700** and applies to SWIPE and Customer Not Present CC flows. It shows how a Retailer can override a transaction and authorize it by inserting a referral authorization code as supplied by the acquirer.
**Assumptions:** The Retailer is registered to use a credit card acquirer.
**Constraints:** The EPG device has power and is not factory locked. EPG Device has Internet access.
- **701.** The customer proceeds to checkout.
- **702.** The retailer enters the amount and selects the currency for the transaction.
- **703.** The EPG device sends authentication details synchronously over SSL including MAC (physical) address, device identification, location, amount and currency.
- **704.** The EPG Server attempts to authenticate the EPG device request.
   ∘ *If step **704** fails, then an error is sent back to the device. This will **LOCK** the device until the retailer re-authenticates as per flow **'100 EPG Device Auth Flow'.***
- **704.1 1** if authentication is successful, then the EPG Service creates a database entry of the transaction with a pending status and generates the UUID (universally unique identifier) for the session.
- **705.** If the request has been successfully authenticated then the EPG Service returns a list of payment methods available and the UUID based on location/currency/retailer sent in the request.
- **706.** The retailer hands the EPG device over to the customer.
- **707.** The customer selects the credit card payment option and inserts his credit card into the ICC (Integrated Circuit Card) in the EPG device.
- **708.** The EPG device reads the credit card chip and prompts the customer to enter the credit card personal identification number.
   ∘ *If step **708** fails, then the customer will be prompted to authenticate again or to swipe the card instead. See **'EPG Device Payment Flow Swipe CC'** or to choose another payment method (see **'1000 EPG Device Payment Flow non CC'**).*
- 709. The customer enters his personal identification number on the EPG device.
- 710. The EPG device validates the entered personal identification number against the inserted credit card.
- 710.1 if successful authentication of credit card, then the EPG device makes a synchronous request over SSL encrypted including MAC (physical) address, device id, location, amount, currency and selected payment type and credit card details to proceed with transaction.
- **711.** The EPG Server updates the transaction status in database and makes a MOTO (Mail Order/Telephone Order) sale request to an acquirer.
   ∘ *If step **711** fails, then an error is returned to the EPG device and the retailer can retry the process or cancel it entirely.*
- **712.** The acquirer requests referral authorization code to be entered.
- **713.** The EPG Service updates the transaction status in the database.
- **713.1** The EPG Service returns the result for referral authorization code as well as information regarding the acquirer.
- **713.2** The EPG device displays an information page with details of the acquirer to call for referral and an input field for the authorization code to be inserted.
- **714.** The retailer calls the acquirer using the provided contact information by the EPG Service.
- **714.1** The retailer enters the authorization code referral as stated by the acquirer on the phone.
- **715.** The EPG sends a synchronous request with the session identifier and the authorization code and transaction identifier.
- **716.** The EPG Service sends the authentication code to the acquirer.
- **717.** The acquirer sends the result back to the EPG Server.
- **718.** The EPG Service updates the transaction status in the database.
- **718.1** The EPG Service sends the result back to the EPG Device.
- **719.** The EPG device displays the result page.
- **720.** The retailer can now print a receipt or end the completed transaction session.

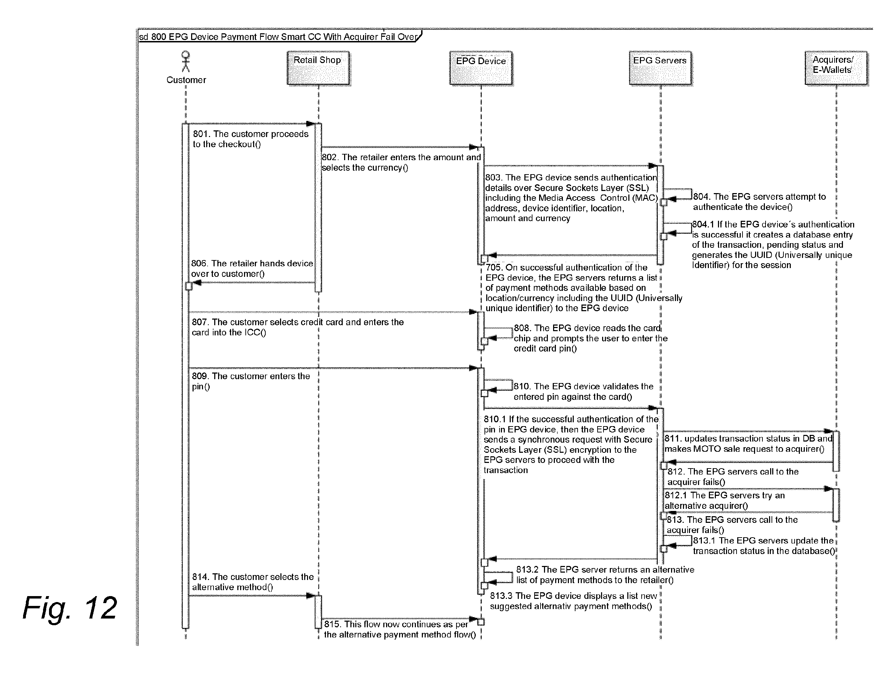

The flow diagram of Fig. 12 shows **EPG Device Payment Flow Smart Credit Card with Acquirer Fail Over 800** and is to show how it is possible to fail over to different acquirers for the selected payment method. If no acquirer is available then the EPG device will offer alternative payment methods. This Flow can be applied for any payment method, in this example we are showing a Credit Card flow.
**Assumptions:** The Retailer is registered to use a multiple payment methods.
**Constraints:** The EPG device has power and is not factory locked. EPG Device has Internet access.
- The customer proceeds to checkout.
- **802.** The Retailer enters the amount and selects the currency for the transaction.
- **803.** The EPG device sends authentication details synchronously over SSL including MAC (physical) address, device identification, location, amount and currency.
- **804.** The EPG Server attempts to authenticate the EPG device request.
   ∘ *If step **804** fails, then an error is sent back to the device. This will **LOCK** the device until the retailer re-authenticates as per flow **'100 EPG Device Auth Flow'.***
- **804.1 1** if authentication is successful, then the EPG Service creates a database entry of the transaction with a pending status and generates the UUID (universally unique identifier) for the session.
- **805.** If the request has been successfully authenticated then the EPG Service returns a list of payment methods available and the UUID based on location/currency/retailer sent in the request.
- **806.** The retailer hands the EPG device over to the customer.
- **807.** The customer selects the credit card payment option and inserts his credit card into the ICC (Integrated Circuit Card) in the EPG device.
- **808.** The EPG device reads the credit card chip and prompts the customer to enter the credit card personal identification number.
   ∘ *If step **808** fails, then the customer will be prompted to authenticate again or to swipe the card instead. See **'EPG Device Payment Flow Swipe CC' or** to choose another payment method (see **'1000 EPG Device Payment Flow non CC'**).*
- **809.** The customer enters his personal identification number on the EPG device.
- **810.** The EPG device validates the entered personal identification number against the inserted credit card.
- **810.1** if successful authentication of credit card, then the EPG device makes a synchronous request over SSL encrypted including MAC (physical) address, device id, location, amount, currency and selected payment type and credit card details to proceed with transaction.
- **811.** The EPG Server updates the transaction status in database and makes a MOTO (Mail Order/Telephone Order) sale request to an acquirer.
   ∘ *If step **811** fails, then an error is returned to the EPG device and the retailer can retry the process or cancel it entirely.*
- **812.** The call from the EPG service to the acquirer fails.
   ∘ *Step **812** can continue for a pre-determined number of attempts and acquirers. I.e. if the EPG Service has 3 different acquirers for the retailer making the request, then all 3 could be tested. Each acquirer can also be retried for X amount of attempts as well.*
- **812.1** The EPG Service selects an alternative acquirer as per the EPG Service rules.
- **813.** The call from the EPG service to the acquirer fails.
- **813.1** The EPG Service updates the transaction status in the database.
- **813.2** The EPG Service returns an alternative list of payment methods to the EPG Device.
   ∘ *At step **813.2** the retailer or the customer could decide to cancel the transaction because the suggested alternative payment methods may not be suitable for either of them.*
- **813.3** The EPG device displays the list of new suggested alternative payment methods.
- **814.** The customer selects an alternative method.
- **815.** This flow now continues as per **'1000 EPG Device Payment Flow (non CC)'**

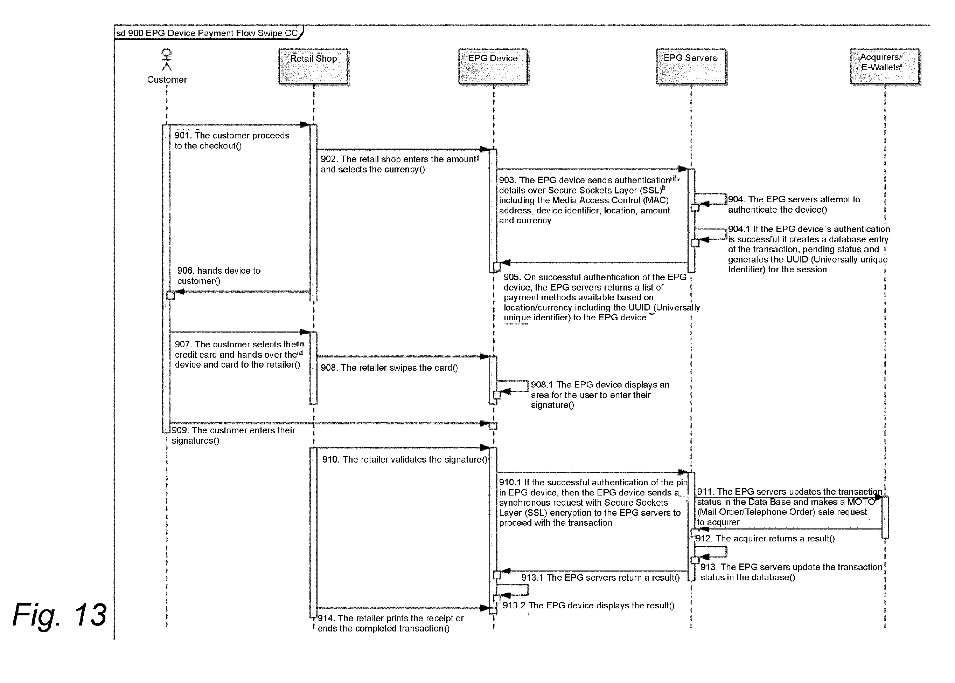

The flow diagram of Fig. 13 shows EPG **Device Payment Flow Swipe CC 900** and how a customer can pay using a non-smart card credit card. The credit card details are taken by swiping the card using the EPG device.
**Assumptions:** The Retailer is registered to use a credit card acquirer.
**Constraints:** The EPG device has power and is not factory locked. EPG Device has Internet access.
- **901.** The customer proceeds to checkout.
- **902.** The Retailer enters the amount and selects the currency for the transaction.
- **903.** The EPG device sends authentication details synchronously over SSL including MAC (physical) address, device identification, location, amount and currency.
- **904.** The EPG Server attempts to authenticate the EPG device request.
   ∘ *If step **904** fails, then an error is sent back to the device. This will **LOCK** the device until the retailer re-authenticates as per flow **'100 EPG Device Auth Flow'.***
- **904.1 1** if authentication is successful, then the EPG Service creates a database entry of the transaction with a pending status and generates the UUID (universally unique identifier) for the session.
- **905.** If the request has been successfully authenticated then the EPG Service returns a list of payment methods available and the UUID based on location/currency/retailer sent in the request.
- **906.** The retailer hands the EPG device over to the customer.
- **907.** The customer selects credit card and hands over the EPG device and his credit card to the Retailer.
- **908.** The retailer swipes the customer's credit card in the EPG device.
   ∘ *If step **908** fails, then the retailer will be prompted to swipe the credit card again. Alternative the customer can choose another payment method (see **'1000 EPG Device Payment Flow non CC**)'.*
- **908.1.** The EPG device displays area for user to enter his signature.
- **909.** The customer signs using the EPG Device stylus.
- **910.** The retailer validates the signature by checking against the credit card.
   ∘ *If step **910** fails, then an update is sent from the device to the EPG servers with a **'FAILED TO AUTHENTICATE'**status message and the EPG Device will show* a ***'CANCELED'** result page with option to print receipt.*
- **910.1** if successful authentication of signature, then the EPG device sends synchronous request over SSL encrypted to the EPG Servers to proceed with transaction.
- **911.** The EPG Service updates the transaction status in database and makes a MOTO sale request to the acquirer.
- **912.** The acquirer sends the result back to the EPG Server.
- **913.** The EPG Service updates the transaction status in the database.
- **913.1** The EPG Service sends the result back to the EPG Device.
- **914.** The EPG device displays the result page.
- **915.** The retailer can now print a receipt or end the completed transaction session.

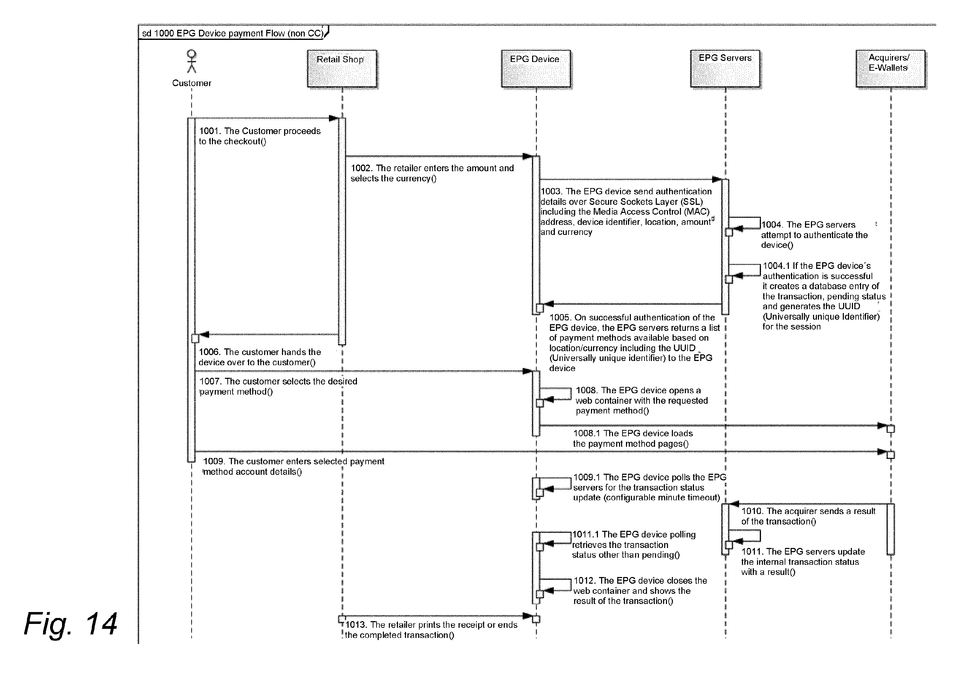

The flow diagram of Fig. 14 shows **EPG Device Payment Flow (non** CC) **1000** and how a customer can pay using an alternative online payment method (other than credit card).
**Assumptions:** The retailer is registered to use alternative payment methods.
**Constraints:** The EPG device has power and is not factory locked. EPG Device has Internet access.
- **1001** The customer proceeds to checkout.
- **1002.** The retailer enters the amount and selects the currency for the transaction.
- **1003.** The EPG device sends authentication details synchronously over SSL including MAC (physical) address, device identification, location, amount and currency.
- **1004.** The EPG Server attempts to authenticate the EPG device request.
- *If step **1004** fails, then an error is sent back to the device. This will **LOCK** the device until the retailer re-authenticates as per flow **'100 EPG Device Auth Flow'.***
- **1004.1** if authentication is successful, then the EPG Service creates a database entry of the transaction with a pending status and generates the UUID (universally unique identifier) for the session.
- **1005.** If the request has been successfully authenticated then the EPG Service returns a list of payment methods available and the UUID based on location/currency/retailer sent in the request.
- **1006.** The retailer hands the EPG device over to the customer.
- **1007.** The Customer selects the desired payment method (i.e. Paypal)
- **1008.** The EPG device opens a web container with the requested payment method online payment page loaded (i.e. Paypal checkout page).
- **1008.1** The EPG device loads the payment method pages.
- **1009.** The Customer enters the selected payment method account details. (i.e. account email address and password).
- **1009.1** The EPG device polls the EPG servers for transaction status update (X minute timeout).
- **1010.** The selected alternative payment method sends the result of the transaction to the EPG Servers (transaction identifier is used as reference).
- **1011.** The EPG Service updates the transaction status with the received result.
- **1011.1** The EPG device polling retrieves the transaction status. If it has changed since the last poll, then it proceeds otherwise it will timeout and result in a failure.
- **1012.** The EPG device closes the web container and shows the result of the transaction.
- **1013.** The retailer can now print a receipt or end the completed transaction session.

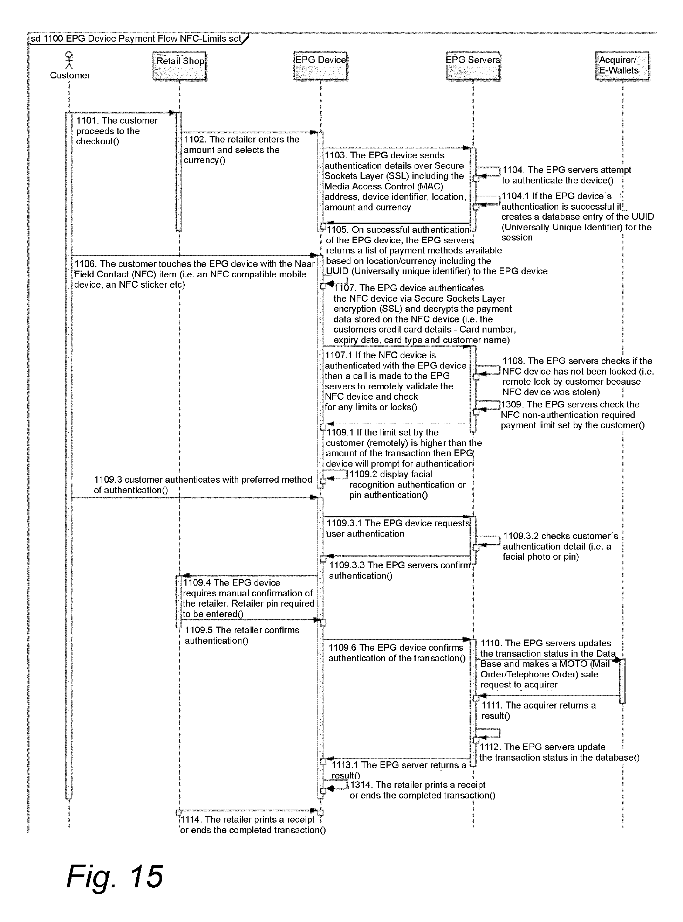

The flow diagram of Fig. 15 shows **EPG Device Payment Flow NFC (Near Field Communication)- Limits set 1100** and how a customer can pay using an NFC device. The customer can remotely set limits on his NFC device so that authentication is required as from a certain amount.
**Assumptions:** The Retailer is registered to accept NFC activated payments.
**Constraints:** The EPG device has power and is not factory locked. EPG Device has Internet access. The EPG device has NFC capabilities.
- **1101** The customer proceeds to checkout.
- **1102.** The retailer enters the amount and selects the currency for the transaction.
- **1103.** The EPG device sends authentication details synchronously over SSL including MAC (physical) address, device identification, location, amount and currency.
- **1104.** The EPG Server attempts to authenticate the EPG device request.
- *If step **1104** fails, then an error is sent back to the device. This will **LOCK** the device until the retailer re-authenticates as per flow **'100 EPG Device Auth Flow'.***
- **1104.1** if authentication is successful, then the EPG Service creates a database entry of the transaction with a pending status and generates the UUID (universally unique identifier) for the session.
- **1105.** If the request has been successfully authenticated then the EPG Service returns a list of payment methods available and the UUID based on location/currency/retailer sent in the request.
- **1106.** The Customer touches the EPG device with his NFC item (i.e. an NFC compatible mobile device, an NFC sticker etc.)
- **1107.** The EPG device authenticates the NFC device via SSL and decrypts the payment data stored on the NFC device (i.e. the customer's credit card details - Card number, expiry date, card type and customer name).
- *Step **1107** is a handshake between the EPG device and the NFC device. The EPG device is the NFC master and will only work and authenticate with a valid NFC slave or Master that is able to authenticate.*
- *If step **1107** fails, then an error will be shown and the customer can either choose an alternative method or cancel the transaction process.*
- *If step **1107** leads to cancelation, then the EPG device will send a **CANCELED** status update to the EPG servers to update the transaction status and the retailer can either terminate or print a receipt.*
- **1107.1** if NFC device is authenticated with the EPG Device then the EPG device sends a request over SSL to the EPG servers to remotely validate the NFC device and check for any limits or locks.
- **1108.** The EPG Service checks if the requested NFC device has not been locked (i.e. remote lock by customer because NFC device was stolen).
- *If step **1108** fails, then an error is returned to the EPG device. The transaction status in the database would be updated to **'FAILED DUE TO NFC DEVICE** LOCK' and the retailer can either terminate or print a receipt.*
- **1109.** The EPG Service checks if the NFC device has non-authentication required payment limit set by customer.
- *Step **1109** will check to see if the customer has set any non-authentication required payment limits on the NFC device. E.g. the customer could set payments of up to X amount without the need for any authentication.*
- **1109.1** If a limit has been set by the customer (remotely) and the limit is higher than the amount being requested in the transaction then the EPG device will need to ask the customer for authentication.
- **1109.2** The EPG device will display facial recognition authentication or personal identification number authentication for the customer to select.
- *Step **1109.2** is dependent on the customer choice when they set up the NFC device account with EPG.*
- **1109.3** The customer authenticates with preferred method of authentication.
- **1109.3.1** The EPG device requests user authentication to be confirmed by the EPG Service. Request will be sent encrypted over SSL.
- **1109.3.2** The EPG Service checks customer's authentication detail (i.e. a facial photo or personal identification number)
- *If step 1109.3.2 fails, then an error message is shown. The Customer can re-authenticate, however a limit of X attempts will be set. After X failed attempts the transaction will be cancelled. See '1200 EPG De**vice Payment Flow NFC** - **No Limits Failed Auth'** diagram*
- **1109.3.3** The EPG Service confirms the authentication.
- **1109.4** The EPG device requires manual confirmation of authentication by the retailer. The Retailer has to enter the Retailer personal identification number.
- **1109.5** The retailer confirms the authentication.
- **1109.6** The EPG Service confirms authentication of the transaction.
- **1110.** The EPG Service updates the transaction status in database and makes a synchronous MOTO sale request to the acquirer.
- **1111.** The acquirer sends the result back to the EPG Server.
- **1112.** The EPG Service updates the transaction status in the database.
- **1113.1** The EPG Service sends the result back to the EPG Device.
- **1113.2.** The EPG device displays the result page.
- **1114.** The retailer can now print a receipt or end the completed transaction session.

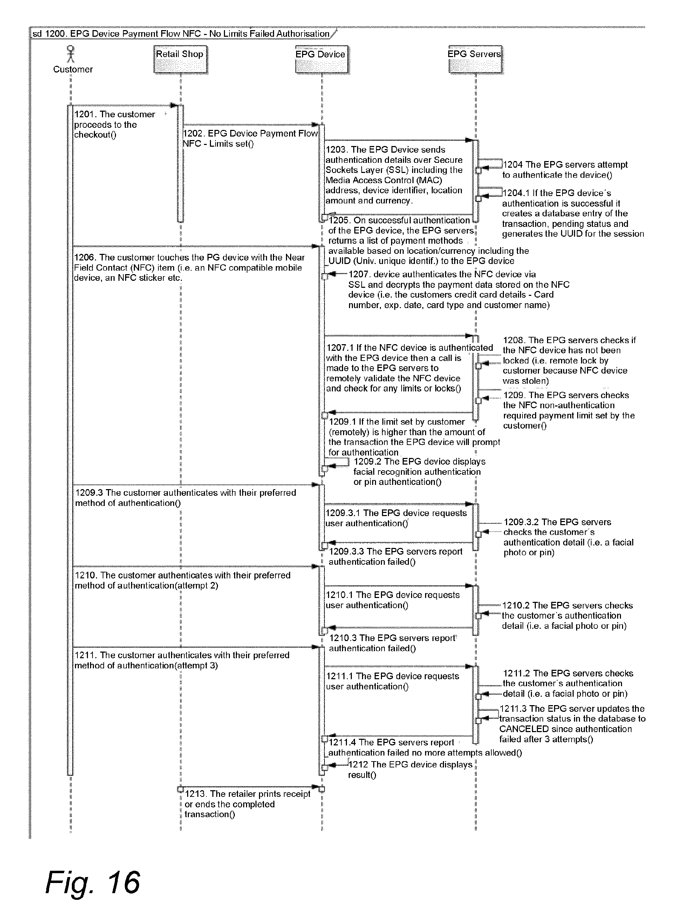

The flow diagram of Fig. 16 shows **EPG Device Payment Flow NFC** - **No Limits Failed Authentication 1200** and a failed authentication for an NFC activated payment. In this example there is a limit of 3 authentication attempts only, but this is configurable.
**Assumptions:** The retailer is registered to accept NFC activated payments.
**Constraints:** The EPG device has power and is not factory locked. EPG Device has Internet access. The EPG device has NFC capabilities.
- **1201** The customer proceeds to checkout.
- **1202.** The retailer enters the amount and selects the currency for the transaction.
- **1203.** The EPG device sends authentication details synchronously over SSL including MAC (physical) address, device identification, location, amount and currency.
- **1204.** The EPG Server attempts to authenticate the EPG device request.
- *If step **1204** fails, then an error is sent back to the device. This will **LOCK** the device until the retailer re-authenticates as per flow **'100 EPG Device Auth Flow'.***
- **1204.1** if authentication is successful, then the EPG Service creates a database entry of the transaction with a pending status and generates the UUID (universally unique identifier) for the session.
- **1205.** If the request has been successfully authenticated then the EPG Service returns a list of payment methods available and the UUID based on location/currency/retailer sent in the request.
- **1206.** The customer touches the EPG device with his NFC item (i.e. an NFC compatible mobile device, an NFC sticker etc.)
- **1207.** The EPG device authenticates the NFC device via SSL and decrypts the payment data stored on the NFC device (i.e. the customer's credit card details - Card number, expiry date, card type and customer name).
- *Step **1207** is a handshake between the EPG device and the NFC device. The EPG device is the NFC master and will only work and authenticate with a valid NFC slave or Master that is able to authenticate.*
- *If step **1207** fails, then an error will be shown and the customer can either choose an alternative method or cancel the transaction process.*
- *If step **1207** leads to cancelation, then the EPG device will send a **CANCELED** status update to the EPG servers to update the transaction status and the retailer can either terminate or print a receipt.*
- **1207.1** if NFC device is authenticated with the EPG Device then the EPG device sends a request over SSL to the EPG servers to remotely validate the NFC device and check for any limits or locks.
- **1208.** The EPG Service checks if the requested NFC device has not been locked (i.e. remote lock by customer because NFC device was stolen).
- *If step **1208** fails, then an error is returned to the EPG device. The transaction status in the database would be updated to **'FAILED DUE TO NFC DEVICE** LOCK' and the retailer can either terminate or print a receipt.*
- **1209.** The EPG Service checks if the NFC device has non-authentication required payment limit set by customer.
- *Step **1209** will check to see if the customer has set any non-authentication required payment limits on the NFC device. E.g. the customer could set payments of up to X amount without the need for any authentication.*
- **1209.1** If a limit has been set by the customer (remotely) and the limit is higher than the amount being requested in the transaction then the EPG device will need to ask the customer for authentication.
- **1209.2** The EPG device will display facial recognition authentication or personal identification number authentication for the customer to select.
- *Step **1209.2** is dependent on the customer choice when they set up the NFC device account with EPG.*
- **1209.3** The customer authenticates with preferred method of authentication.
- **1209.3.1** The EPG device requests user authentication to be confirmed by the EPG Service. Request will be sent encrypted over SSL.
- **1209.3.2** The EPG Service checks customer's authentication detail (i.e. a facial photo or personal identification number).
- *If step **1209.3.2** fails, then an error message is shown. The Customer can re-authenticate, however a limit of X attempts will be set. After X failed attempts the transaction will be cancelled. See **'1200 EPG Device Payment Flow NFC** - **No Limits Failed Auth'** diagram*
- **1209.3.3** The EPG device determines that the authentication has failed due to response from EPG Servers.
- **1210.** The customer authenticates again with preferred method of authentication (attempt 2).
- **1210.1 1** The EPG device requests user authentication to be confirmed by the EPG Service. Request will be sent encrypted over SSL.
- **1210.2** The EPG Service checks customer's authentication detail (i.e. a facial photo or personal identification number).
- **1210.3** The EPG device determines that the authentication has failed due to response from EPG Servers.
- **1211.** The customer authenticates again with preferred method of authentication (attempt 3).
- **1211.1** The EPG device requests user authentication to be confirmed by the EPG Service. Request will be sent encrypted over SSL.
- **1211.2** The EPG Service checks customer's authentication detail (i.e. a facial photo or personal identification number).
- **1211.3.** The EPG Service updates the transaction status in database to ***'FAILED TO AUTHENTICATE'***since authentication failed after 3 attempts.
- **1211.4** The EPG Services sends the authentication failed message to the EPG device.
- **1212.** The EPG device displays the result page.
- **1213.** The retailer can now print a receipt or end the completed transaction session.

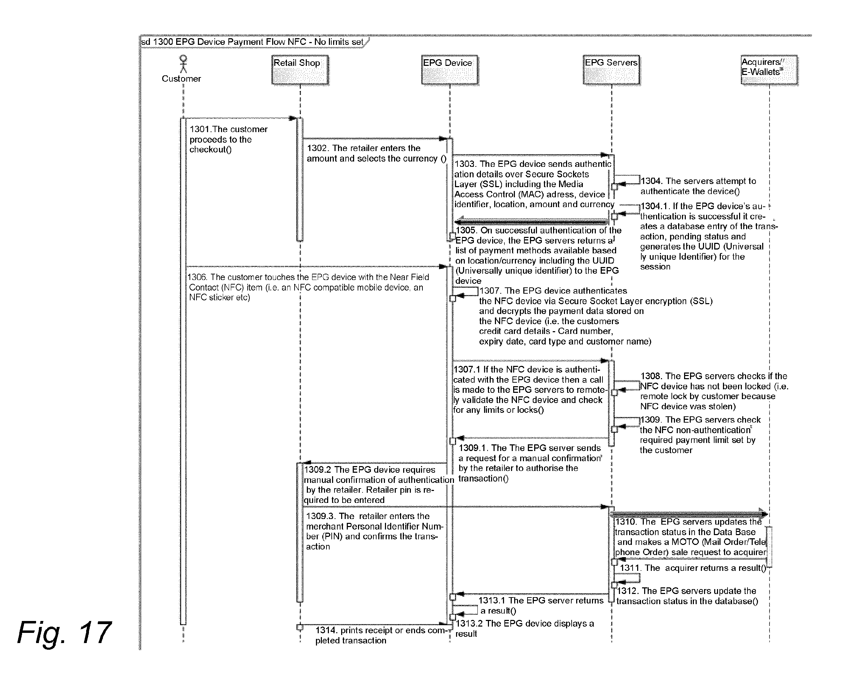

The flow diagram of Fig. 17 shows **EPG Device Payment Flow NFC - No limits set 1300** and how a customer can pay using an NFC device. The customer can remotely set limits on his NFC device so that authentication is required as from a certain amount. In this example, there are no limits.
**Assumptions:** The retailer is registered to accept NFC activated payments.
**Constraints:** The EPG device has power and is not factory locked. EPG Device has Internet access. The EPG device has NFC capabilities.
- **1301.** The customer proceeds to checkout.
- **1302.** The retailer enters the amount and selects the currency for the transaction.
- **1303.** The EPG device sends authentication details synchronously over SSL including MAC (physical) address, device identification, location, amount and currency.
- **1304.** The EPG Server attempts to authenticate the EPG device request.
- *If step **1304** fails, then an error is sent back to the device. This will **LOCK** the device until the retailer re-authenticates as per flow **'100 EPG Device Auth Flow'.***
- **1304.1** if authentication is successful, then the EPG Service creates a database entry of the transaction with a pending status and generates the UUID (universally unique identifier) for the session.
- **1305.** If the request has been successfully authenticated then the EPG Service returns a list of payment methods available and the UUID based on location/currency/retailer sent in the request.
- **1306.** The customer touches the EPG device with his NFC item (i.e. an NFC compatible mobile device, an NFC sticker etc.)
- **1307.** The EPG device authenticates the NFC device via SSL and decrypts the payment data stored on the NFC device (i.e. the customer's credit card details - Card number, expiry date, card type and customer name).
- *Step **1307** is a handshake between the EPG device and the NFC device. The EPG device is the NFC master and will only work and authenticate with a valid NFC slave or Master that is able to authenticate.*
- *If step **1307** fails, then an error will be shown and the customer can either choose an alternative method or cancel the transaction process.*
- *If step **1307** leads to cancelation, then the EPG device will send a **CANCELED** status update to the EPG servers to update the transaction status and the retailer can either terminate or print a receipt.*
- **1307.1** if NFC device is authenticated with the EPG Device then the EPG device sends a request over SSL to the EPG servers to remotely validate the NFC device and check for any limits or locks.
- **1308.** The EPG Service checks if the requested NFC device has not been locked (i.e. remote lock by customer because NFC device was stolen).
- *If step **1308** fails, then an error is returned to the EPG device. The transaction status in the database would be updated to **'FAILED DUE TO NFC DEVICE LOCK' and** the retailer can either terminate or print a receipt.*
- **1309.** The EPG Service checks if the NFC device has non-authentication required payment limit set by customer.
- **1309.1** The EPG Service sends a request for a manual confirmation by the retailer to authorize the transaction.
- *Step **1309.1** is required* so *that the retailer can manually confirm or reject a transaction that does not require the customer's authentication. This is done to reduce the liability of the retailer. It can also be used in the case that the retailer wishes to reject a transaction if he suspects foul play (i.e. under age purchasing of alcohol).*
- **1309.2** The EPG device requires manual confirmation of authentication by the retailer. The retailer needs to enter his personal identification number to confirm.
- **1309.3** The retailer enters his merchant personal identification number and confirms the transaction.
- **1310.** The EPG Service updates the transaction status in database and makes a MOTO sale request to the acquirer.
- **1311.** The acquirer sends the result back to the EPG Server.
- **1312.** The EPG Service updates the transaction status in the database.
- **1313.1** The EPG Service sends the result back to the EPG Device.
- **1313.2.** The EPG device displays the result page.
- **1314.** The retailer can now print a receipt or end the completed transaction session.

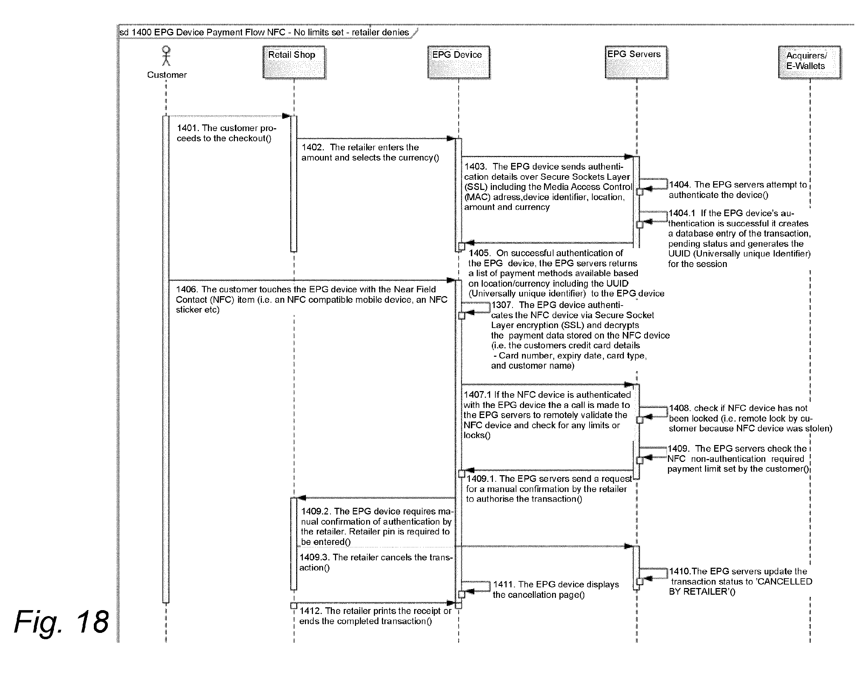

The flow diagram of Fig. 18 shows **EPG Device Payment Flow NFC** - **No limits set - retailer denies 1400** and how a customer can pay using an NFC device. The customer can remotely set limits on his NFC device so that authentication is required as from a certain amount. In this example, there are no limits but the retailer denies the transaction.
**Assumptions:** The retailer is registered to accept NFC activated payments.
**Constraints:** The EPG device has power and is not factory locked. EPG Device has Internet access. The EPG device has NFC capabilities.
- **1401.** The customer proceeds to checkout.
- **1402.** The retailer enters the amount and selects the currency for the transaction.
- **1403.** The EPG device sends authentication details synchronously over SSL including MAC (physical) address, device identification, location, amount and currency.
- **1404.** The EPG Server attempts to authenticate the EPG device request.
- *If step **1404** fails, then an error is sent back to the device. This will **LOCK** the device until the retailer re-authenticates as per flow **'100 EPG Device Auth Flow'.***
- 1404.1 if authentication is successful, then the EPG Service creates a database entry of the transaction with a pending status and generates the UUID (universally unique identifier) for the session.
- **1405.** If the request has been successfully authenticated then the EPG Service returns a list of payment methods available and the UUID based on location/currency/retailer sent in the request.
- **1406.** The customer touches the EPG device with his NFC item (i.e. an NFC compatible mobile device, an NFC sticker etc.)
- **1407.** The EPG device authenticates the NFC device via SSL and decrypts the payment data stored on the NFC device (i.e. the customer's credit card details - Card number, expiry date, card type and customer name).
- *Step **1407** is a handshake between the EPG device and the NFC device. The EPG device is the NFC master and will only work and authenticate with a valid NFC slave or Master that is able to authenticate.*
- *If step **1407** fails, then an error will be shown and the customer can either choose an alternative method or cancel the transaction process.*
- *If step **1407** leads to cancelation, then the EPG device will send a **CANCELED** status update to the EPG servers to update the transaction status and the retailer can either terminate or print a receipt.*
- **1407.1** If NFC device is authenticated with the EPG Device then the EPG device sends a request over SSL to the EPG servers to remotely validate the NFC device and check for any limits or locks.
- **1408.** The EPG Service checks if the requested NFC device has not been locked (i.e. remote lock by customer because NFC device was stolen).
- *If step **1408** fails, then an error is returned to the EPG device. The transaction status in the database would be updated to **'FAILED DUE TO NFC DEVICE LOCK'** and the retailer can either terminate or print a receipt.*
- **1409.** The EPG Service checks if the NFC device has non-authentication required payment limit set by customer.
- **1409.1** The EPG Service sends a request for a manual confirmation by the retailer to authorize the transaction.
- *Step **1409.1** is required* so *that the retailer can manually confirm or reject a transaction that does not require the customer's authentication. This is done to reduce the liability of the retailer. It can also be used in the case that the retailer wishes to reject a transaction if he suspects foul play (i.e. under age purchasing of alcohol).*
- **1409.2** The EPG device requires manual confirmation of authentication by the retailer. The Retailer needs to enter his personal identification number to confirm.
- **1409.3** The retailer cancels the transaction because he suspects foul play or for any other reason.
- **1410.** The EPG Servers update the transaction status to **'CANCELED BY RETAILER'.**
- **1411.** The EPG device displays the transaction cancelled page.
- **1412.** The retailer can now print a receipt or end the completed transaction session.

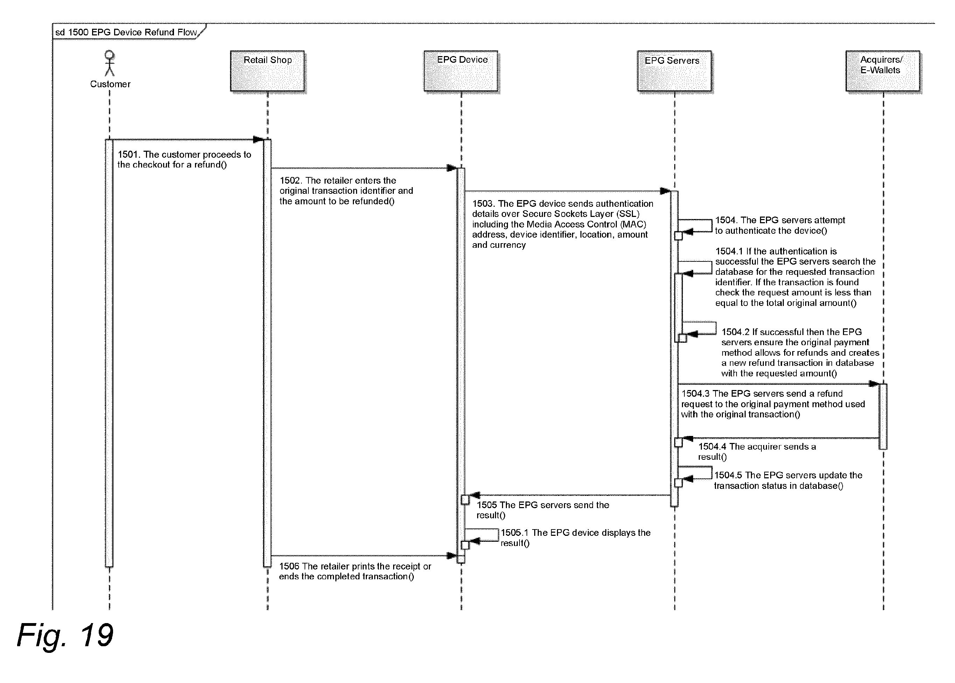

The flow diagram of Fig. 19 shows **EPG Device Refund Flow 1500** and how a retailer can request a refund for a previously processed transaction.
**Assumptions:** The retailer is registered with EPG for refund services.
**Constraints:** The EPG device has power and is not factory locked. EPG Device has Internet access.
- **1501.** The customer proceeds to checkout for a refund.
- **1502.** The retailer enters the amount to be refunded as well as the original transaction identification number.
- **1503.** The EPG device sends authentication details synchronously over SSL including MAC (physical) address, device identification, location, amount and transaction identification number.
- **1504.** The EPG Server attempts to authenticate the EPG device request.
- *If step* **1504** *fails, then an error is sent back to the device. This will **LOCK** the device until the retailer re-authenticates as per flow **'100 EPG Device Auth Flow'.***
- **1504.1** if the EPG Service has successfully authenticated the EPG request then it searches the EPG database for the requested transaction. If the transaction is found it then checks that the requested amount to be refunded is less than or equal to the total original amount as per the requested transaction.
- **1504.2** If the EPG service finds that the previous step is true, then it checks that the original payment method allows refunds and creates a new refund transaction in the EPG database with requested refund amount.
- **1504.3** After the EPG Service successfully creates the new refund transaction it sends a refund request to original payment method/acquirer used with the original transaction.
- **1504.4** The payment method/acquirer sends result back to EPG Servers of refund request.
- **1504.5.** The EPG Service updates the transaction status in the database.
- **1505.1** The EPG Service sends the result back to the EPG Device.
- **1505.2.** The EPG device displays the result page.
- **1506.** The retailer can now print a receipt or end the completed transaction session.

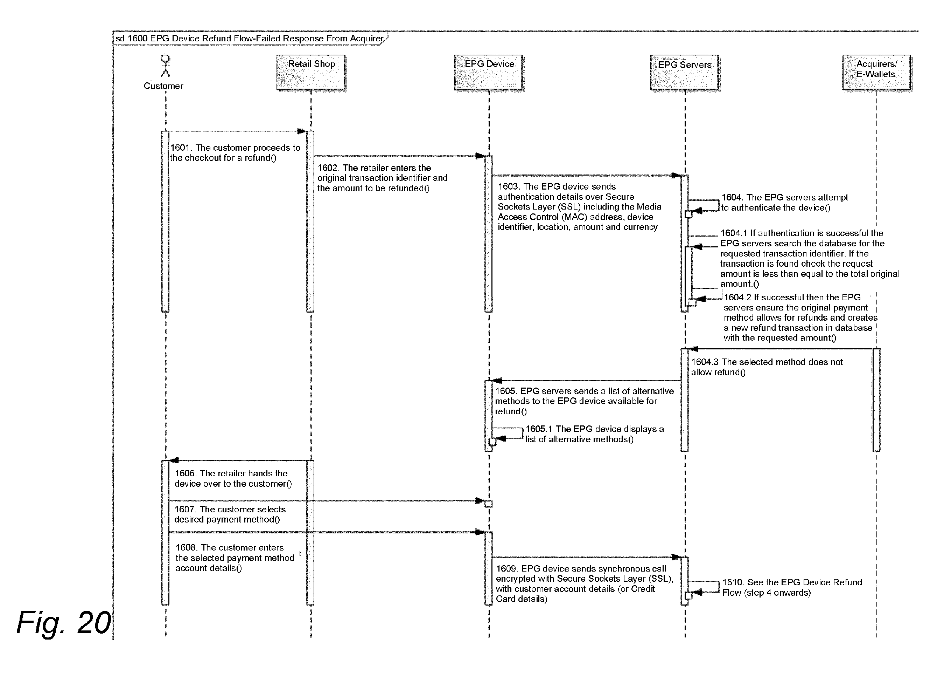

The flow diagram of Fig. 20 shows **EPG Device Refund Flow - Failed Response From Acquirer 1600** and how a retailer can request a refund for a previously processed transaction. In this flow, the original acquirer fails to process the refund. This flow also applies for acquirers who do not accept refunds.
**Assumptions:** The retailer is registered with EPG for refund services.
**Constraints:** The EPG device has power and is not factory locked. EPG Device has Internet access.
- **1601.** The customer proceeds to check out for a refund.
- **1602.** The retailer enters the amount to be refunded as well as the original transaction identification number.
- **1603.** The EPG device sends authentication details synchronously over SSL including MAC (physical) address, device identification, location, amount and transaction identification number.
- **1604.** The EPG Server attempts to authenticate the EPG device request.
- *If step* **1604** *fails, then an error is sent back to the device. This will **LOCK** the device until the retailer re-authenticates as per flow **'100 EPG Device Auth Flow'.***
- **1604.1** If the EPG Service has successfully authenticated the EPG request then it searches the EPG database for the requested transaction. If the transaction is found it then checks that the requested amount to be refunded is less than or equal to the total original amount as per the requested transaction.
- **1604.2** If the EPG service finds that the previous step is true, then it checks that the original payment method allows refunds and creates a new refund transaction in the EPG database with requested refund amount.
- **1604.3** The acquirer responds with a failure and the refund has not been successful.
- **1605.** The EPG Service returns a list of alternative payment methods that can be used to request the refund.
- **1605.1** The EPG device displays the list of the suggested payment methods.
- **1606.** The retailers hands the EPG device over to the customer so that he can select an alternative method.
- **1607.** The customer selects another method.
- **1608.** The customer enters the selected payment account details (i.e.
   if the customer chose Paypal, then the customer would need to enter his Paypal account number in order to receive the refund).
- **1609.** The EPG device sends authentication details synchronously over SSL including MAC (physical) address, device identification, location, amount, transaction identification number and also the customer's payment account details as entered in the previous step.
- **1610.** See '**1500 EPG Device Refund Flow - step 4 onwards'.**

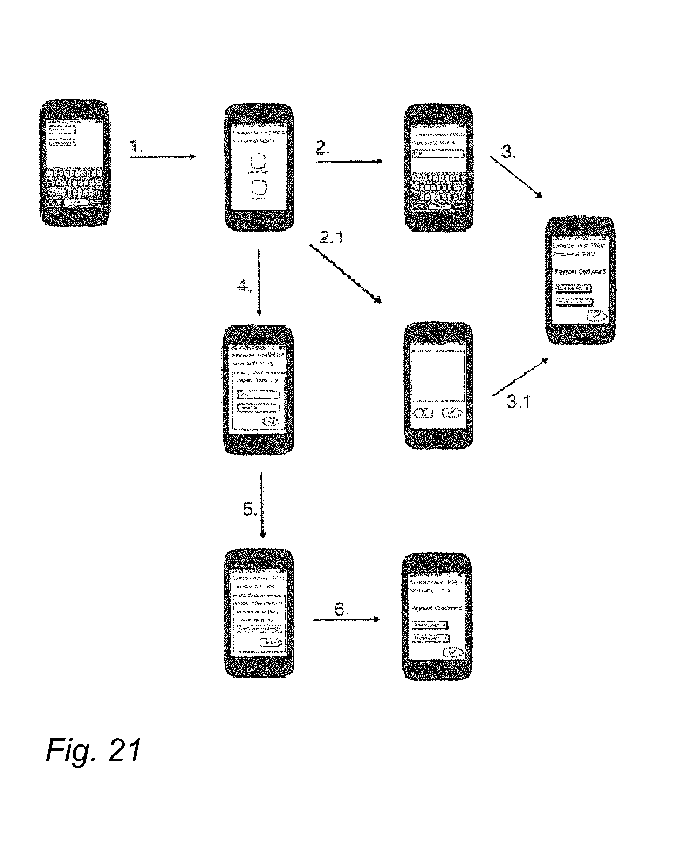

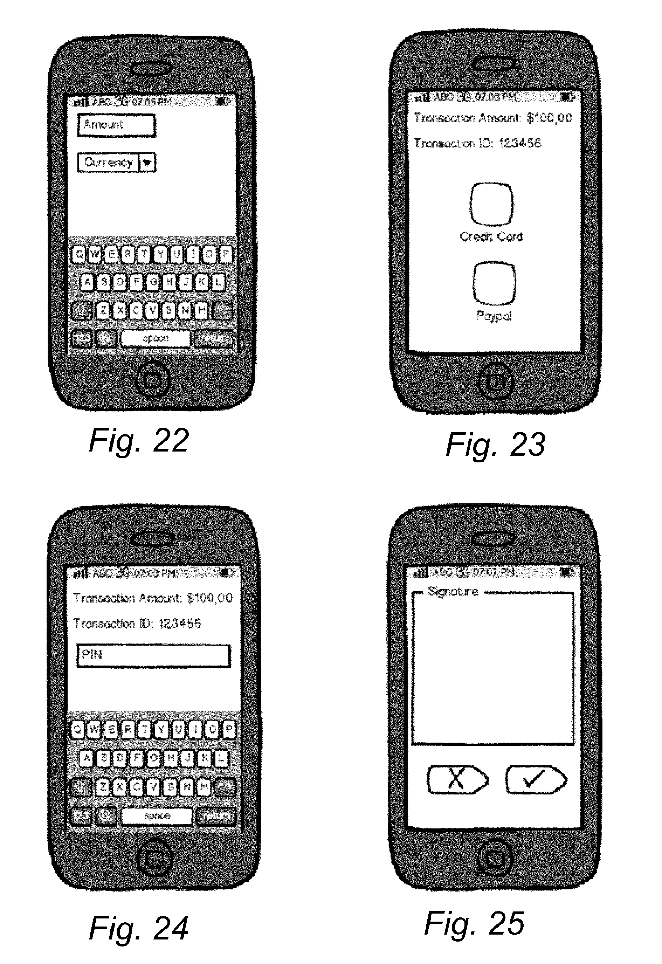

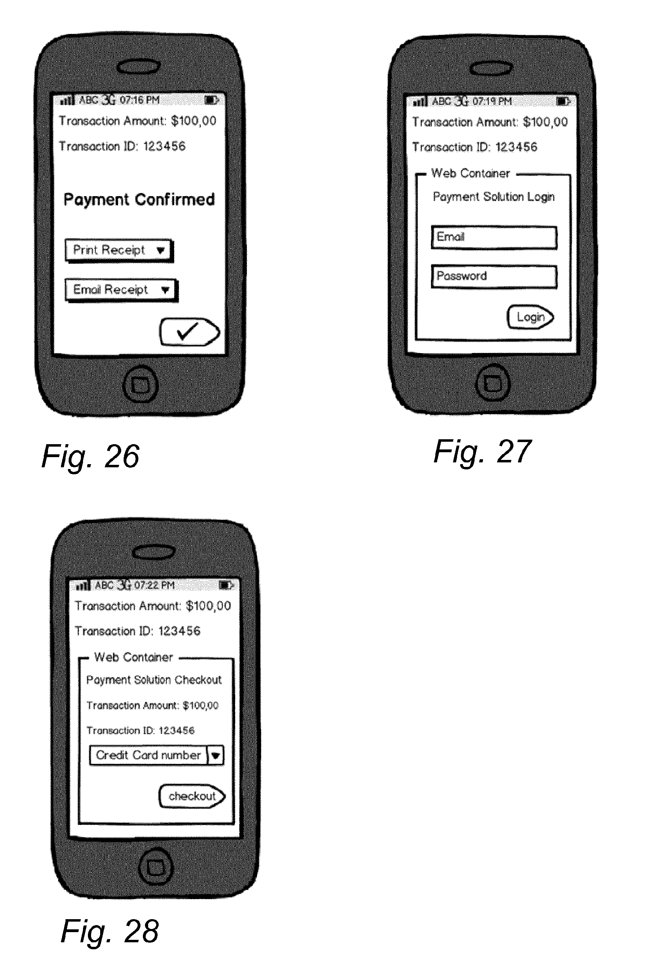

The diagram of Fig. 21 and Fig. 22 - Fig. 28 show **Example transaction flow and is** an example of the type of screens (User Interface) that the EPG Payment Device will display when a customer performs a checkout.
**Assumptions:** The retailer is registered with EPG for both credit card and alternative solutions.
**Constraints:** The EPG device has power and is not factory locked. EPG Device has Internet access.
- 1. Screen 1 shows when the customer proceeds to check out for a checkout and the retailer has entered the amount and selected the currency for the transaction as shown in Fig. 22. The EPG Payment Device then displays a screen, c.f. Fig 23, for the user to select a payment method as returned by the EPG Services.
- **2.** Screen 2 and Fig 24 show the screen the EPG Payment Device will display if the customer chose Credit Card and uses a credit card with chip. This screen prompts the customer to enter the credit card PIN.
- **2.1** Screen 2.1 and Fig. 25 show what the EPG Payment Device would display if the customer swiped their credit card. This screen prompts the customer to sign and the retailer needs to confirm that the signature is the same as the one on the credit card.
- **3.** Screen 3 and Fig. 26 show a confirmation page of the transaction. In this example, the transaction was authenticated and successful. If the transaction failed the same screen would be showed but with an error message.
- **3.1** Screen 3.1 is the same as 3.
- **4.** Screen 4 shows the screen that the EPG Payment Device would display if the customer chose to pay with an alternative payment solution (i.e. Paypal). This screen as shown in Fig. 27 consists of a web container in which the alternative payment solution login page is loaded.
- **5.** Screen 5 as shown in Fig. 28 is a continuation of Screen 4. The difference is the contents of the web container. This will be different dependent on the alternative payment solution chosen. These pages are hosted by the payment solution.
- **6.** This screen is the same as Screen 3.

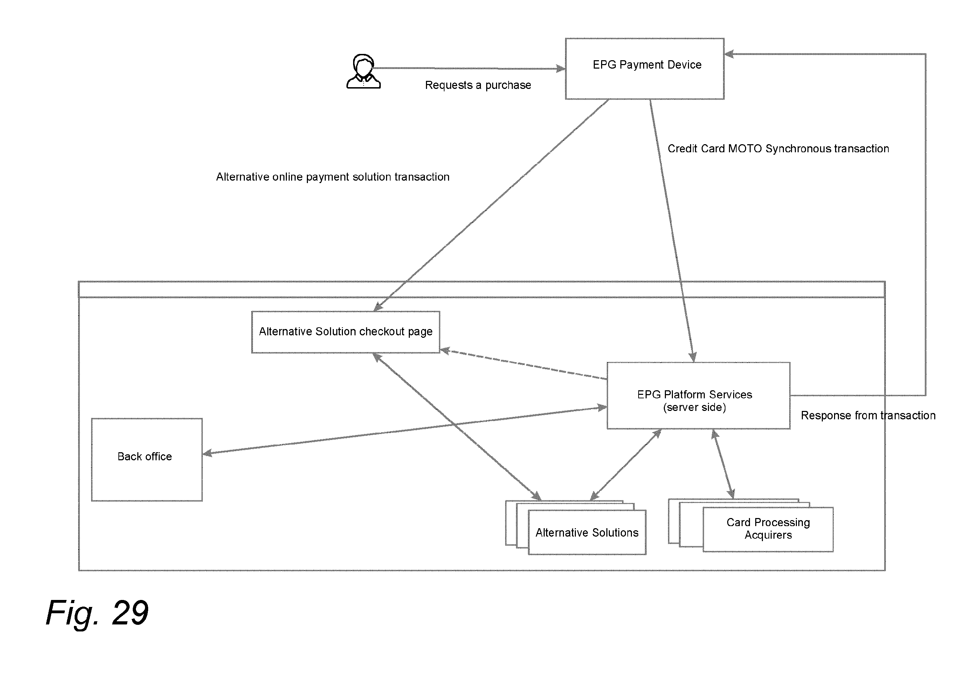

Fig. 29 is a diagram showing a very high level overview of the components used in the EPG system. From the EPG Payment Device in the retail shop to the EPG Server Side Services.
- **EPG Payment Device** - this is the actual payment device (hardware) that will be found in the retail shop. In various embodiments and as indicated in Fig. 29 it can be an Android based system. Also other platforms and operative systems can be used.
- **Alternative Payment Solution Checkout Page -** This is the actual software module such as a Java Server Side Page that will be loaded into the EPG Payment Device (as shown in Screen 6 and 7) that loads the selected alternative payment solution pages (i.e. Paypal, Moneybookers, Ukash etc).
- **EPG Platform Services (Server Side)** - This component consists of all the services that EPG offers that are hosted on a server online. These services cover all of the services and functionality in all of the included sequence diagrams in this document.
- **Back Office** - This component consists of the online functionality that EPG offers its customers and retailers. This back office requires a valid username and password to access its features:
   o Invoicing
   o Transaction Searches
   o Transaction Refunding
   o Transaction Updating
   o Customer payment Limits
   o Customer white and black shop lists
   o Customer Account Details (including Facial recognition image)
- **Alternative Solutions** - This component represents a list of alternative solutions that will be accessed by the EPG Services to facilitate online alternative payments.
- **Card Processing Acquirers -** This component represents a list of credit card processing acquirers that will be accessed by the EPG Services to facilitate credit card payments.

There is one simple way in which an online merchant would be able to integrate into EPG. The important thing to consider is that unlike every other payment solution platform or provider, EPG does not require the merchant to have an online presence in order to process a transaction or invoice their customers as this can be done via the EPG Payment Device that does not require any sort of integration. EPG is designed to be quick and easy to setup to match most, if not all, of today's customers and merchant's day to day demands when it comes to online transactional processing.

Online Merchants can access the EPG checkout page in 3 different ways. The first way and probably the most common, is to load the page either via a popup or full frame, this of course is the method used for online merchants. This means that the customer still has full access and control to the merchant's main site whilst having a small popup open where they can perform any checkouts. This sort of execution is particularly interesting for gaming companies that have a lot of activity and contents shown on their main site and require their customers to have constant access to their payment methods. The second way of loading the checkout page would be as an iframe.

To facilitate easy integration to online merchants, the checkout page can be styled to look like the merchant's own pages with the use of CSS and images which can be passed in with every request meaning the cashier can be styled in real time, although a default style is also provided for those who simply want to get up and running as quickly as possible. Bear in mind that the online checkout page only lists the payment methods available, it is not intended to be a cashier. It is intended as the final stage for a payment confirmation.

As shown in the diagram of Fig. 29, the checkout module of EPG communicates to the main EPG Service module. This module routes the requests to the different services in the platform and can be accessed directly by the online merchant. This means that online merchants can use EPG without the need of using the inbuilt checkout page. As mentioned before, many online merchants will already have integrations into different payment solutions as well as their own baskets and checkout pages. By exposing the EPG Services module, online merchants are able to keep their existing basket and checkout pages and still benefit from the EPG flexibility and performance.

This is achieved very simply by sending an optional parameter in the form submission to EPG with the name of the payment solution the online merchant wishes to use. The benefit of this is that the merchant has full control of the look and feel of the checkout page without having to deal with the integration or redirection of the actual payment integration. This is handled by EPG.

While certain illustrative embodiments of the invention have been described in particularity, it will be understood that various other modifications will be readily apparent to those skilled in the art without departing from the scope and spirit of the invention. Accordingly, it is not intended that the scope of the claims appended hereto be limited to the description set forth herein but rather that the claims be construed as encompassing all equivalents of the present invention which are apparent to those skilled in the art to which the invention pertains.

## Claims

1. An electronic payment system comprising a mobile electronic payment device, a payment gateway connecting and integrating said mobile electronic payment device to a platform services server and to alternative online payment providers, each payment transaction being based on form submission.

2. A method of electronic payment, comprising the steps:
a) supplying a user interface on a mobile electronic payment device allowing a customer to select payment method,
b) generating a form based on payment selection and merchant specific data,
c) transmitting said form to a payment gateway,
d) forwarding from said payment gateway payment request data to selected online payment provider,
e) receiving in said payment gateway payment result data from selected online payment provider, and
f) presenting on said mobile electronic payment device the result of the payment request.

3. A mobile electronic payment device comprising:
a) a card reader;
b) a wi-fi module;
c) a touch screen;
d) a payment routing interface;
e) a payment monitoring and alerting interface; and
f) a payment interface.

4. A mobile electronic payment device as claimed in claim 3, further comprising:
a) a magnetic card reader;
b) a smart card reader;
c) a near field contact reader;
d) two subscriber identity modules;
e) a bluetooth module;
f) a touch screen;
g) two cameras; and
h) two universal serial bus connections.
